# EUROPEAN PATENT SPECIFICATION

(11) **EP 3 797 282 B1**
(45) Date of publication and mention of the grant of the patent: **23.09.2026**
(21) Application number: 19806981.7
(22) Date of filing: 21.05.2019
(51) Int. Cl.: G01N 15/1429, G01N 15/14, G01N 15/10

(54) **FAST RECOMPENSATION OF FLOW CYTOMETERY DATA FOR SPILLOVER READJUSTMENTS**
SCHNELLER ERNEUTER AUSGLEICH VON DURCHFLUSSZYTOMETRIEDATEN FÜR ÜBERLAUFNEUANPASSUNGEN
RECOMPENSATION RAPIDE DE DONNÉES DE CYTOMÉTRIE DE FLUX POUR RÉAJUSTEMENTS DE DÉBORDEMENT

(30) Priority: 21.05.2018 US 201862674273 P
(43) Date of publication of application: 31.03.2021
(73) Proprietor: Cytek Biosciences, Inc., Fremont, CA 94538 (US)
(72) Inventor: ZHANG, Zhenyu, Fremont, California 94538 (US)
(74) Representative: Vossius & Partner Patentanwälte Rechtsanwälte mbB
(86) International application number: PCT/US2019/033419
(87) International publication number: WO 2019/226717

(56) References cited:
- WO-A1-2017/011549
- US-A1- 2004 119 974
- US-A1- 2004 119 974
- US-A1- 2010 120 059
- US-A1- 2010 256 943
- US-A1- 2011 204 259
- US-A1- 2014 087 394
- US-A1- 2015 177 148
- FRELINGER JACOB ET AL: "Flow: Statistics, visualization and informatics for flow cytometry", SOURCE CODE FOR BIOLOGY AND MEDICINE, BIOMED CENTRAL LTD, LO, vol. 3, no. 1, 17 June 2008 (2008-06-17), pages 10, XP021040009, ISSN: 1751-0473
- ISTVÁN P SUGÁR ET AL: "Improved compensation in flow cytometry by multivariable optimization", CYTOMETRY A, WILEY-LISS, HOBOKEN, USA, no. 5, 11 April 2011 (2011-04-11), pages 356 - 360, XP072333698, ISSN: 1552-4922, DOI: 10.1002/CYTO.A.21062
- ULRIKA JOHANSSON ET AL: "Tandem dyes: Stability in cocktails and compensation considerations", CYTOMETRY PART B CLINICAL CYTOMETRY, WILEY-LISS, HOBOKEN, NJ, US, vol. 86, no. 3, 10 January 2014 (2014-01-10), pages 164 - 174, XP072331458, ISSN: 1552-4949, DOI: 10.1002/CYTO.B.21154
- FRELINGER, JACOB ET AL.: "Flow: Statistics, visualization and informatics for flow cytometry", SOURCE CODE FOR BIOLOGY AND MEDICINE, vol. 3, no. 1, 2008, pages 1 - 12, XP021040009

## Description

### FIELD

The embodiments of the invention relate generally to the analysis of flow cytometer data to determine a count of particles in samples.

### BACKGROUND

A flow cytometer generally has a viewing orifice that is illuminated by one or more lasers. The laser light from the one or more lasers strikes various fluorochrome-labelled particles passing through the orifice. The fluorochrome-labelled particles are typically various biological cells in a sample labeled with different fluorochromes (fluorescent dyes) that can be analyzed to obtain information about the sample that can be generalized to the whole. One or more optical detectors in the flow cytometer are used to sense the fluorescence (fluorescent light) that is emitted from the fluorochrome-labelled particles passing through the orifice that are struck by the laser light from the one or more lasers.

One or more different optical filters can be arranged before the emitted fluorescence from the fluorochrome-labelled particles reaches each detector. The optical filters are arranged in the emission fluorescence path such that each detector sees only a specific bandwidth of light associated with expected fluorescence of fluorochromes. That is, the bandwidth of any given filter takes advantage of a peak in the emission spectra of a specific fluorescent dye. In this way, for any given particle, the collective signal from the detectors indicates the type of fluorochrome or fluorochromes attached to a particle. The signals detected by the detectors from the emitted fluorescence allows quick and comprehensive cellular classification of the various particles in the sample.

However, emission spectrum can overlap between dyes. This limits the number of different fluorochromes that can be simultaneously detected on a given particle by a single laser and detector. Because emission bandwidths typically range in wavelengths between 30 nanometers (nm) and 60nm, conventional flow cytometers can usually detect no more than for four or five fluorochromes per laser line. Increasing the number of lasers provides an expedient but costly way to increase the number of fluorochromes that can be simultaneously detected.

Further complicating detection of the emitted fluorescent light is the fact that many dyes used to stain particles are excited over a range of laser wavelengths differing from and greater than the typical 30nm to 60nm bandwidth range. This can lead to signal crosstalk between detectors for the different lasers.

Prior flow cytometry fluorescence detection systems limited the divergence by increasing the collimating lens focal length. However, this resulted in a larger diameter light beam that limited the number of detectors, such as to six detectors, depending on the size of the final image required. In these prior flow cytometry systems, the final image size was constrained by optical aberrations in collimating a large size of optical imaging, such as 800 micro-meters or microns (um), and broad band light (e.g., 400nm-800nm in wavelength) into a set of detectors that has a size less than 3 millimeter (mm) in diameter.

In another flow cytometry system, the incident light is re-imaged using spherical micro-mirrors for each detector in a detector chain of a set of detectors in a row. Re-imaging avoids the diverging collimated light problem of the above mentioned flow cytometry system. However, the number of detectors is limited by the aberration introduced by reflections from the spherical micro-mirrors. Since the image size increases along the detector chain, to increase the number of detector channels down the row in the detector chain, large area detectors are required resulting in a large flow cytometer that is bulky and expensive.

Resolution of spectrally overlapping emission spectra is also central to increasing the number of detectable fluorochromes. A detector array can be used to identify fluorochromes based on a collective emission signature across multiple wavelengths to increase the number of detectable fluorochromes. In essence, the entire fluorescence signal is chromatically dispersed into an array of detectors either by diffraction grating or prisms. In this way, the entire emission spectra is discretized across the detectors. Spectral deconvolution (unmixing) can be used to calculate the contribution of the known individual fluorochrome spectra to the total collected signal. However, this approach to increasing the number of detectable fluorochromes has two major limitations.

The continuous, linear characteristics of a dispersion-element/detector array does not allow for bandwidths to be adjusted to take advantage of the true nature of fluorochrome spectra. Accordingly, the recognition of the wider bandwidth favors longer wavelength fluorochromes while overlooking details of shorter wavelength fluorochromes with compressed spectra. Additionally, scattered light from other lasers, if present, is unavoidably collected by the array of detectors. This scattered light compromises the fluorescence signal that is to be detected by a detector.

Accordingly, there is a need for further improvement in a flow cytometer to increase the number of detectable fluorochromes and better analyze fluorochrome-labeled particles in a sample.

US 2004/119974 A1 relates to instruments for analyzing a multiplicity of fluorescent dyes using a multiplicity of photodetectors. Further related technologies are disclosed in István P Sugár et al (Improved compensation in flow cytometry by multivariable optimization) and Ulrika Johansson et al (Tandem dyes: Stability in cocktails and compensation considerations).

### BRIEF SUMMARY

The embodiments of the invention are summarized by the claims that follow below.

### BRIEF DESCRIPTIONS OF THE DRAWINGS

Figure 1 is a block diagram of a detection module of a flow cytometer system.
Figure 2A is a schematic diagram of an image array with successive channel reimaging.
Figure 2B is a schematic diagram of a 1f image array with alternate channel reimaging.
Figure 3 is a schematic diagram of a compact detection module including a 16 channel 1f image array for a modular flow cytometer system.
Figure 4A is a magnified view of fluorescent light exiting at different points over the diameter of the optical fiber.
Figure 4B is a magnified view of a detector to convert optical signals into electrical signals.
Figure 5 is a magnified view of a portion of the 1f image array.
Figure 6 is a diagram of a detection module in a modular flow cytometer system with a 16 channel 1f image array and 16 detector channels.
Figures 7A-7C are differing diagrammatic views of a detection module in a modular flow cytometer system with a pair of 8 channel 1f image arrays and a pair of 8 detector channels.
Figure 8 is a perspective view of a 1f image array with spherical micro-mirrors.
Figures 9A-9B are cross section views of the 1f image array of Figure 8.
Figure 10 is a perspective view of a 1f image array with concave rectangular micro-mirrors.
Figure 11 is a top side view of a portion of the 1f image array of Figure 10.
Figure 12 is a perspective view of a mounting block adjacent imaging block and a low cost thin outline detector that is used in the detector modules of Figure 6 and Figures 7A-7C.
Figure 13 is a top view of an optical plate assembly in a modular flow cytometry system.
Figure 14 is a basic conceptual diagram of a flow cytometer system.
Figure 15 is an overall method for performing an experiment on a flow cytometer.
Figure 16A is a diagram of a calibrating process of a flow cytometer with single stained compensation controls to generate an initial spillover matrix or reference matrix with levels of compensation.
Figure 16B is a diagram of running a sample through the flow cytometer resulting in a mixed sample event vector with an overlapping spectral profile due to multi-stained cells or particles.
Figure 16C is a diagram of a processing using an inverse matrix (determined from the initial spillover matrix and/or the initial reference matrix with fine adjustments) on the event data to generate a compensated sample event vector or an unmixed sample event vector.

### DETAILED DESCRIPTION

In the following detailed description of the embodiments, numerous specific details are set forth in order to provide a thorough understanding. However, it will be obvious to one skilled in the art that the embodiments can be practiced without these specific details. In other instances well known methods, procedures, components, and circuits have not been described in detail so as not to unnecessarily obscure aspects of the embodiments of the invention.

The embodiments of the invention include a method for a flow cytometer with a compact highly multiplexed detection module.

### GENERAL OVERVIEW

A flow cytometer with a compact detection module for fluorescence is disclosed with an increased number of detectors and a minimal image size at the detectors compared to prior flow cytometers. Each detector module is fed by at least one laser. Multiple lasers can be supported by multiple detector arrays in a compact manner. The increased number of detectors is made possible by careful control of incremental aberrations in the detector array as light is transmitted through the detection chain. The compact size of the compact detection module is achieved by a reduced distance between the micro-mirrors and filters and careful downward scaling, thereby minimizing image degradation down the row or chain of micro-mirrors and filters in the imaging array.

Prior limitations can be overcome by use of an optical system with multiple individual detectors and an adjustable progression of filter bandwidths. The optical system enables a concentration of spectral collocation points to best resolve spectra of both long and short wavelength dyes used to mark the particles analyzed by the flow cytometer. Fluorescence from excited particles are imaged into a multimode fiber by an objective lens with a high numbered aperture (NA). The broadband fluorescence exiting the multimode fiber is collimated and then coupled into (imaged onto) multiple detectors. Collimation of the broadband fluorescent light exiting the multimode fiber is a challenge.

### DETECTION MODULE FOR FLOW CYTOMETER

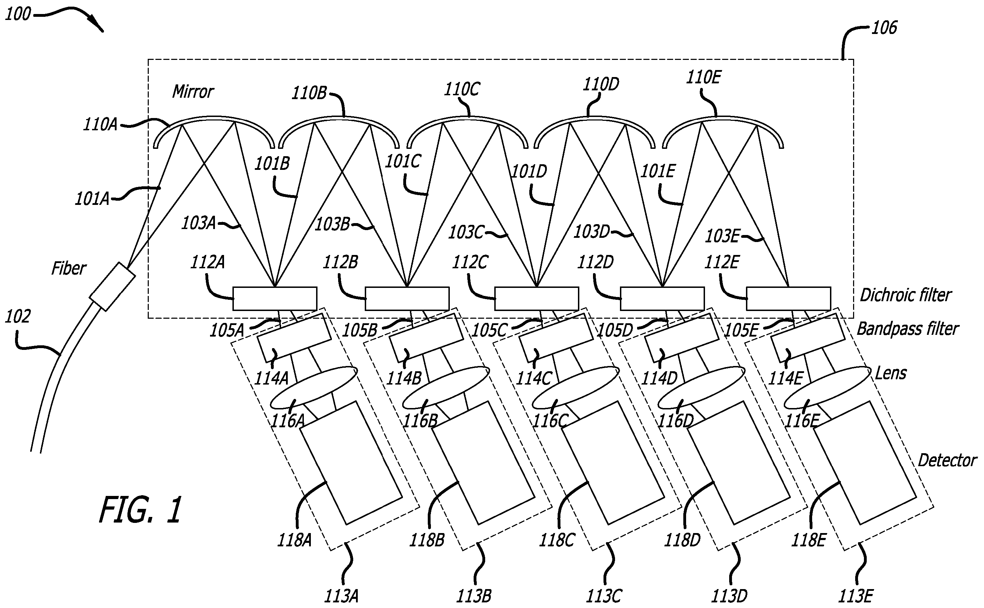

Figure 1 shows a functional block diagram of a portion of a detection module 100 for a flow cytometer. An advanced flow cytometer can include a plurality of detection modules. The detection module 100 is a wavelength de-multiplexing system. The detection module 100 successively reflects and reimages the fluorescent light output 101A from an optical fiber 102 in an image array 106. The image array 106 is a mechanical image array including a plurality of reflective mirrors 112A-112E and a corresponding plurality of long-pass dichroic filters 110A-110E suspended in air by mechanical mounts. Generally, a dichroic filter is an accurate color filter used to selectively pass light of a range of wavelengths of color light while reflecting other wavelengths of color light. Alternatively, the plurality of long-pass dichroic filters 110A-110E can be band pass filters.

The image array 106 is capable of reflectively reimaging a fiber spot of light N times (where N is greater than 2) while maintaining the optical quality of the fiber spot at the end of the image array. Reimaging is function of recreating the original image with some aberration, a reimage, at a surface such as that of each of the dichroic filters 110A-110E. The detection module 100 further includes a plurality of detector channels 113A-113E respectively comprising a plurality of objective lenses 116A-116E, and a plurality of detectors 118A-118E with light being in communication with each. Optionally, the plurality of detector channels 113A-113E can further include a plurality of bandpass filters 114A-114E respectively to be sure the various desired wavelength ranges are detected by the plurality of detectors.

In the image array 106, the light 101A that is incident onto the first mirror 110A is reflected by the mirror into reflected light 103A. The reflected light 103A from the first mirror 110A passes through air and is incident upon a first long-pass dichroic filter 112A. The light 103A from the first mirror 110A is split up by the long-pass dichroic filter 112A into a continued light portion 101B and a pass-through or transmitted light portion 105A. The continued light portion 101B passes through air and is incident upon the next mirror in the series, mirror 110B. The transmitted light portion 105A is coupled into the first bandpass filter 114A of the first detector channel 113A. The transmitted light portion 105A is cleaned up by the bandpass filter 114A and then coupled into the optical detector 118A by the objective lens 116A. This process repeats for each stage (detector channel) in the image array 106.

The image array 106 includes five stages that reimages five times on each long-pass dichroic filter. It is still desirable to include a greater number of detectors. However, after more than 5 reimages, beam distortion through the reflective mirrors can accumulate to the point where the image quality at the last dichroic filter becomes highly deteriorated. To make the zigzag configuration between mirrors and dichroic filters in the image array 106 perform properly with a greater number of detectors, it is desirable to minimize image degradation along the light path.

Minimizing image degradation in a detection module can be achieved using two mechanisms. If the bending power of each reflective mirror in the image array is reduced (e.g., by a factor of two - one half the bending power), image degradation can be reduced. If the number of times that the light beam is reimaged in the image array is reduced (e.g., by a factor or two - one half the number of times) image degradation can be further reduced.

Reducing the bending angle at the mirrors reduces aberrations of all types. Since aberrations increase non-linearly with bending angle, the improvement gained by switching from "fast focus mirrors" to "slow focus mirrors" is significantly better than 2X, allowing retention of image quality through many more reflections. The image quality incident on a last detector in a chain of detectors can be further improved by reducing the number of times a light beam is re-imaged in the image array. Instead or re-imaging at each dichroic filter for each detector channel, the incident light can be reimaged on every other dichroic filter and detector channel (e.g., odd detector channels).

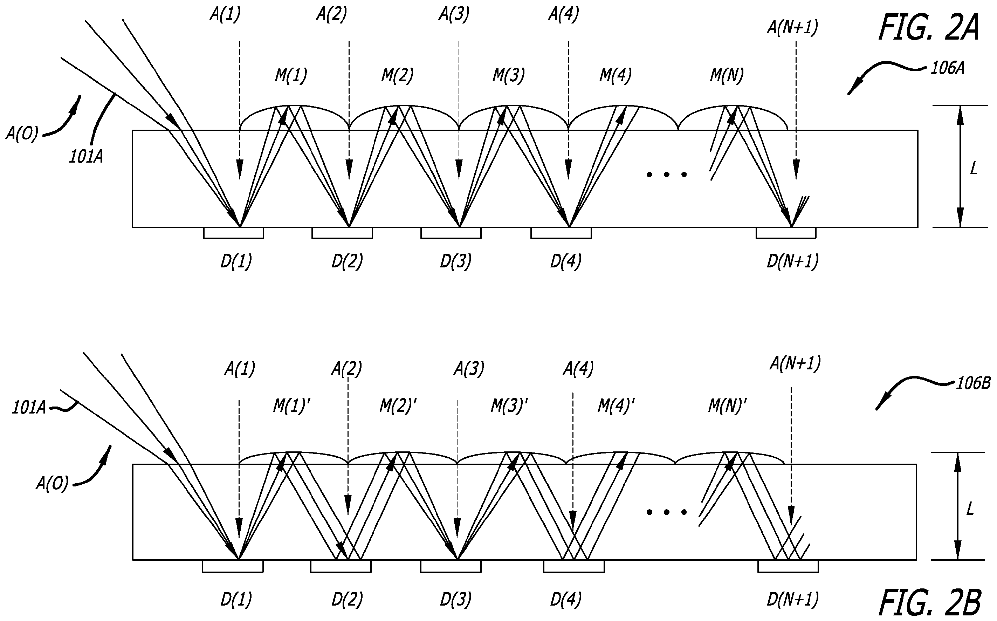

Reference is now made to Figures 2A-2B to describe image arrays 106A-106B providing an improvement in image quality by using a transparent block with micro-mirrors having differing radius of curvature. Generally, the image array consists of an array of micro-mirrors and an opposing array of bandpass and/or dichroic filters for each detection channel. The thickness L of the transparent block between the serial chain or row of micro-mirrors M(n),M(n)' on one side and the serial chain or row of dichroic filters D(n) on the opposing side in each case is the same. However, the focal lengths of the micro-mirrors M(n) and M(n)' differ in the image arrays 106A-106B of Figures 2A-2B.

The focal length f of the micro-mirrors M(n)' in Figure 2B is L while the focal length f of the micro-mirrors M(n) in Figure 2A is one half L. The larger focal length of the micro-mirrors M(n)' in the image array 106B reduces the bending angle and aberrations in the imaging along the serial chain of mirrors. Furthermore, the image array 106B is a 1f image array with the given the thickness L of the transparent block and the focal length of the micro-mirrors M(n)' such that reimaging occurs on odd dichroic filters, such as dichroic filters D(3), D(5), D(7), through D(n).

In Figures 2A-2B, spot A(1) through spot A(n) are the spot sizes (area) respectively on the dichroic filters D(1) through D(N). Spot A(0) is the fiber aperture of the multi-mode fiber from which the fluorescent light is input into each array 106A-106B. In Figures 2A and 2B, the fiber aperture can be considered to be infinitesimally small to illustrate the image conjugation properties of the two designs.

Figure 2A illustrates an image array 106A having a plurality of micro-mirrors M(1) through M(N) and a plurality of long pass dichroic filters D(1) through D(N), where N is a whole number value greater than one representing the number of detector channels. Through reflection by the micro-mirror M(1), light focused at a spot A(1) at dichroic filter D(1) is re-imaged through reflection of micro-mirror M(1) to focus the light at spot A(2) at dichroic filter D(2). This is repeated by each of the micro-mirrors M(2) through M(N) down the serial chain or row. The image array 106A is a 2f image array.

Figure 2B illustrates a 1f design for an image array 106B with a plurality of micro-mirrors M(1)' through M(N)' and a plurality of long pass dichroic filters D(1) through D(N). The micro-mirrors M(1)' through M(N)' have a different radius of curvature than the radius of curvature of micro-mirrors M(1) through M(N). The 1f image array 106B provides an improvement in image quality at the detectors (e.g., detectors 118A-118E in Figure 1) over that of 2f image array 106A.

The chain of micro-mirrors M(1)' through M(N)' in the 1f image array 106B are designed to relay an image down the chain through the property of telescope optics. For example, light focused at spot A(1) at the dichroic filter D(1) is imaged to spot A(3) at the dichroic filter D(3) through a telescope effect of micro-mirrors M(1)' and M(2)'. The even spot, Spot A(2), is an intermediate spot in the collimating space.

The plurality of long-pass dichroic filters D(1) through D(N) can alternatively be passband or bandpass optical filters or include both a dichroic optical filter and a bandpass optical filter in combination together to assure a limited range of wavelengths of light pass through. Dichroic optical filters use the principle of thin-film interference and can also be referred to as an interference filter. For each channel, the bandpass or passband optical filter is tuned to pass a different selected range of wavelength of light (the passband) to each detector and reflect the rest of the light wavelengths back to a micro-mirror in the micro mirror array.

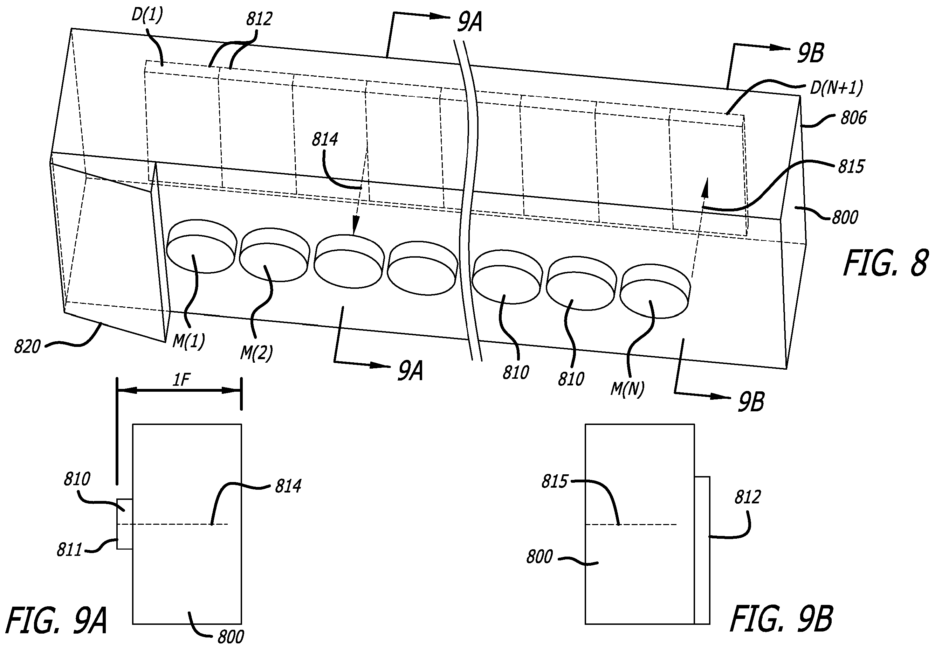

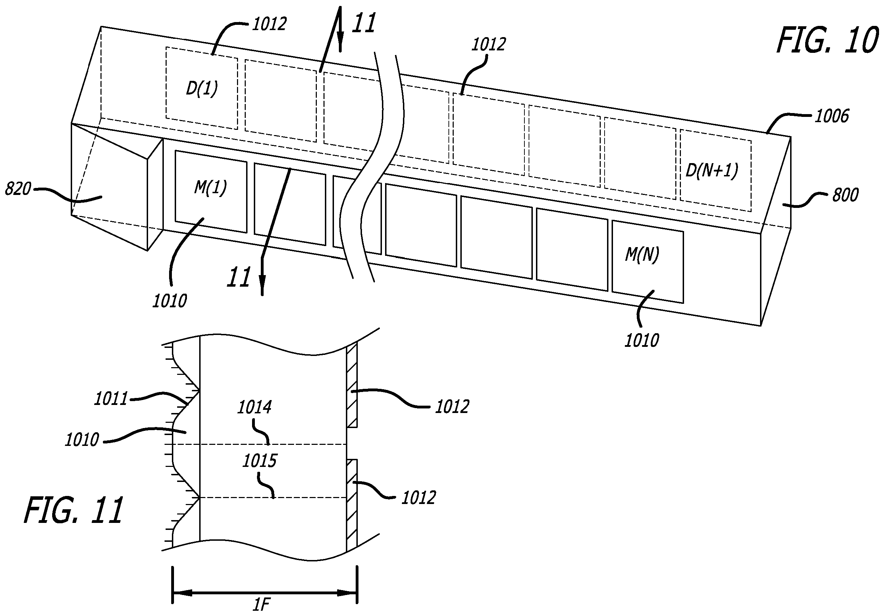

To provide a compact detector module, the image array 106B is formed out of a solid transparent material such as further explained with reference to Figures 8 and 10. The solid transparent material of the transparent imaging block used for the 1f image array can be clear glass or clear plastic, for example, with mirrors and dichroic filters formed into or on the transparent material.

The design of 1f image array 106B and the design of 2f image array 106A can be compared, under the conditions of the same thickness of the solid transparent material, the same pitch and the same incident angle. The path distance between adjacent micro-mirrors in the 2f image array 106A and 1f image array 106B is similar. In this case, the path distance is the physical distance, not the conventional path length, where the refraction index of the material is taken into account. However, the focal length of micro-mirrors in the 2f image array 106A is shorter (one half) than the focal length of the micro-mirrors in the 1f image array 106B. Stated differently, the actual focal length of the micro-mirrors in the 1f image array 106B is twice that of the focal length of the micro-mirrors in the 2f image array 106A due to the different radius of curvatures in the micro-mirrors. A longer focal length reduces the bending power in each reflection, which minimizes the aberration introduced in the micro-mirror reflection. Accordingly, the aberrations in the 1f image array 106B are improved over those of the 2f image array 106A.

In the 2f image array system 106A, the fiber aperture A(0) is imaged to spot A(1) at the dichroic filter D(1). The image at spot A(2) is a re-image of spot A(1) through reflection of micro-mirror M(1). Continuing through the zigzag light path in the array 106A, each spot A(n) at each dichroic filter D(n) is imaged by the next micro-mirror M(n) to the next spot A(n+1) at the next dichroic filter D(n+1). In this configuration, the path distance between spot A(n) and micro-mirror M(n) is the thickness L of the transparent block which is 2 times (twice) the focal length of the micro-mirrors M(n).

In the 1f image array system 106B, light from the fiber aperture A(0) is imaged down to a spot A(1) at the dichroic filter D(1) by an input channel. In the image array system 106B, one can consider that the light path from micro-mirror M(1)' to micro-mirror M(2)' forms the equivalence of a telescope with a magnification equal to 1. In such a case, the spot A(1) is imaged to spot A(3) through the telescope of micro-mirrors M(1)' and M(2)' with spot A(2) being the intermediate spot in the collimating space. Adjacent micro-mirrors M(3)' and M(4)' form another telescope to reimage spot A(3) to spot A(5). Continuing the zigzag path in in the imaging array 106B, the odd spots A(1), A(3), A(5)...A(2n+1) are all conjugated to each other, with the even spots A(2), A(4), A(6),... A(2n) being intermediate spots in the collimating space. In this configuration, the path distance between spot A(n) and micro-mirror M(n)' is the thickness L of the transparent block which is one focal length of the micro-mirrors M(n)'.

Each spot on the filter is formed by a bunch of light rays. The angular distribution of the bunch of light rays is determined by the numerical aperture (NA) of the input multimode-fiber 102 and the input channel to the imaging array of the imaging system . The cone-angle of light at spot A(1) is proportional to the numerical aperture of the multi-mode fiber 102. If the image magnification m from the fiber aperture A(0) to the spot A(1) is a ratio of 1 to m, where m is greater than one, then the cone angle at spot A(1) is smaller than the cone angle at the fiber aperture A(0) by a factor of m.

In the 2f image array system 106A of Figure 2A, the image magnification from any spot A(n) to the adjacent spot A(n+1) is equal to one, for any value of n. Disregarding the aberration, the cone angle of rays at the dichroic filters D(1) through D(N+1) of the image array system 106A are the same for all detector channels.

Referring now to Figure 2B, the distance between the dichroic filter D(1) and the micro-mirror M(1)' is L. If the total number of channels N is an even number in the 1f image array 106B, the spot A(1) is imaged to spot A(3) through micro-mirrors M(1)'-M(2)' (considering a 1X telescope), and spot A(2) at dichroic filter D(2) is in the collimating space. A portion of the collimated light at spot A(2) is reflected by the dichroic filter D(2) towards the micro-mirror M(2)'.

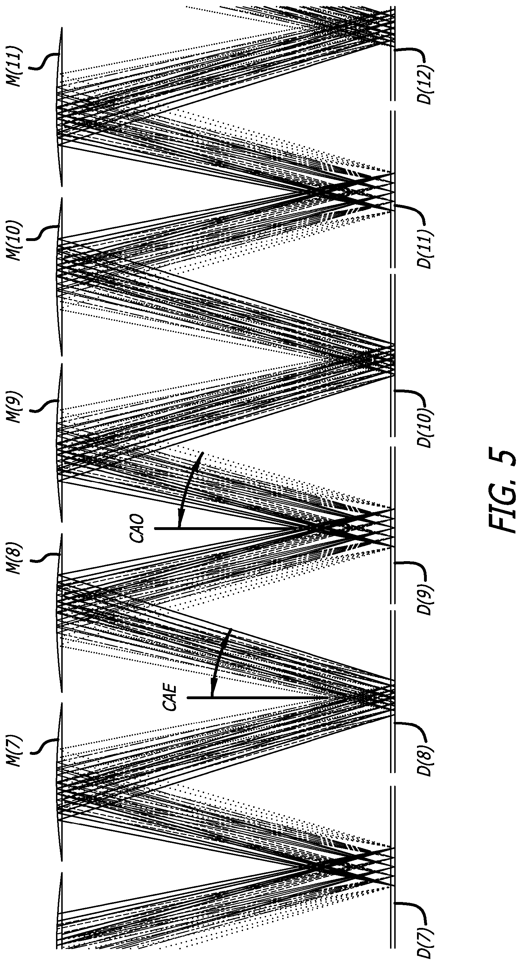

Accordingly, the 1f image array 106B has odd detector channels at spots A(1), A(3), ... A(2k-1) .. through A(N-1) and even detector channels at spots A(2), A(4), ... A(2k),...through A(N), where 1≤k ≤ (N/2) . Since spot A(1) is in the front focal point of micro-mirror M(1)', and the path distance between adjacent micro-mirrors is twice the focal length, all the odd spots A(1), A(3), A(5)...A(2n+1) are the images of the fiber aperture (as indicated in Figure 2B by light ray convergence to the odd spots), and all the even spots A(2), A(4), A(6),... A(2n) are in the collimating space (as indicated in Figure 2B by the parallel light rays at the even spots). Accordingly, as shown in Figure 5, the cone angle of odd spots (the odd cone angle CAO) for odd detector channels is different from the cone angle of even spots (the even cone angle CAE) for the even detector channels.

In the 1f image array 106B, the center wavelength and passband width of each optical dichroic filter D(1) through D(N) differs from each other. The center wavelength and passband width of each optical dichroic filter are designed for optimized sampling of the fluorescence spectrum of dye to yield better accurate unmixing of a large quantity of different dyes. For example, assuming a fluorescence spectrum of light wavelengths from 400nm to 800nm and a sixteen (16) channel detection module, a bandwidth of 25nm in light wavelength can be analyzed by each. For example, the first detector channel and the first dichroic filter D(1) can bandpass and analyze light wavelengths from 400nm to 425nm with a center wavelength of 412.5nm. Wavelengths outside 400nm to 425nm are substantially filtered out and not passed onto the first detector in the first detector channel. A second detector channel and the second dichroic filter D(2) can bandpass and analyze light wavelengths from 425nm to 450nm with a center wavelength of 437.5 nm and increasing so on and so forth for each detector channel. The last or sixteenth detector channel and sixteenth dichroic filter D(16) can bandpass and analyze light wavelengths from 775nm to 800nm with a center wavelength of 787.5nm.

The characteristics of the 1f image array 106B allow the initial optical signal to be propagated into a greater number of detectors than the 2f image array 106A. The 1f image array 106B reduces the off-axis aberration through reducing the bending power in each mirror reflection. However, with the odd cone angles CAO being different from the even cone angles CAE at the dichroic filters in the odd and even channels, one needs to determine an optimum magnification m in an input stage from the fiber aperture A(0) to the spot A(1) at the dichroic filter D(1). For a given fiber numeric aperture (NA) and aperture diameter, the magnification m from the fiber aperture A(0) to the spot A(1) at the dichroic filter D(1) is optimized for both odd and even detector channels in the 1f image array 106B.

From the spectrum resolution point of view, dichroic filter performance degrades as the cone angle of the incident spot increases. In the 1f image array 106B, the cone angle of spots in odd channels are different from that in the even channels. Basically, the cone angle in the odd channels is determined by the numeric aperture (NA) of the multi-mode fiber and the magnification factor m from fiber aperture A(0) to the spot A(1) at the dichroic filter D(1). In contrast, the cone angle of even channels is determined by the spot diameter of spots in the odd channels.

In the input channel, assume the image magnification is m from aperture A(0) at the fiber to spot A(1) at the dichroic filter D(1). At the even detector channel (dichroic filters D(2k)), the cone angle is proportional to the magnification m. However, in the odd detector channels (dichroic filters D(2k-1)), the cone angle is inversely proportional to the magnification m. A larger magnification from the fiber aperture A(0) to the spot A(1) results in a smaller cone angle at odd detector channels (dichroic filters D(2k-1)) but a larger cone angle at the even detector channels (dichroic filters D(2k)). In one example embodiment having a multimode fiber with NA=0.12, aperture diameter 600um, and a micro-mirror (filter) pitch of 5.5mm; the recommended magnification m was modeled to be approximately 2. Obviously, other magnifications m can be determined with different inputs and thus the embodiments disclose herein are not limited to a 2X magnification. In the example presented for the 1f image array 106B, both the numeric aperture (NA) and the number of reimages is reduced by a factor of 2, allowing for at least four times (4X) more detectors along a row of the same length than the 2f image array 106A.

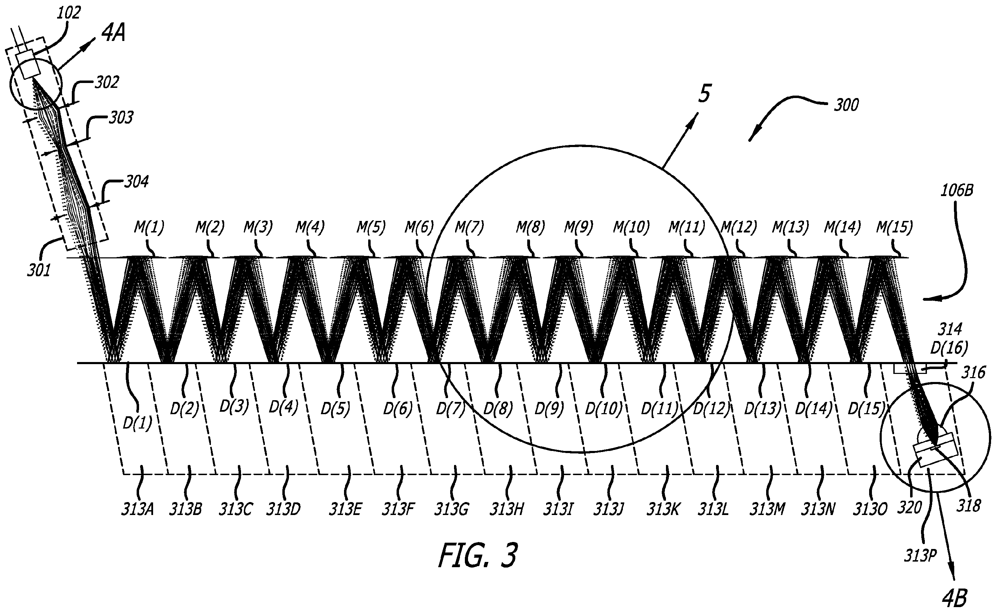

Figures 3, 4A-4B, and 5 illustrate graphs of simulation results of a compact detection module with the 1f image array 106B and example input values of an embodiment having a fiber with NA=0.12, an aperture diameter 600um, a micro-mirror (filter) pitch of 5.5mm; and a recommended magnification of 2X. The different colors of light rays shown in Figures 3, 4A-4B, and 5 are for clarity only to show how light at the different positions pass through the detector module.

Figure 3 shows one end of the optical fiber 102 that launches fluorescent light into the detection system. Near the opposite end (not shown) of the optical fiber 102, a collection objective lens with a high NA can be used to collect the fluorescent light from an aperture and couple it into the opposite end of the optical fiber. The optical fiber 102 then collects the light from the objective lens and directs it to the end shown in Figure 3. Near the end shown in Figure 3, the system can include a fiber numeric aperture converter to lower the numeric aperture into free space to launch the fluorescent light to the detector array.

Referring now to Figure 3, the magnification m in the compact detection module 300 is achieved by an input stage 301. The input stage 301 includes a collimating lens 302, a blocking filter 303, and a focusing lens 304. The magnification, m, is achieved by adjusting the ratio of focal lengths of the collimating lens 302 and focusing lens 304. For instance, to set the magnification equal to 2 (m=2), the focal length of focusing lens 304 is twice that of the collimating lens 302. The input channel 301 may be considered to further include an input portion of a transparent block (e.g., wedge, block thickness, see Figure 8) in the image array 106B before the first dichroic filter D(1) is reached.

The collimating lens 302 receives the light launched from the fiber 102 and collimates the light. The collimated light is passed through the blocking filter 303 and input into the focusing lens 304. The blocking filter 303 is used to clean out the laser light that is scattered into the collection optics near the opposite end of the optical fiber 102. The fluorescent spectrum of light associated with the fluorochromes passes through the blocking filter 303 and into the focusing lens 304. The focusing lens 304 focuses the fluorescent spectrum of light onto the first dichroic filter D(1) in the image array 106B to form an image at spot A(1). The image at spot A(1) is magnified in size (e.g., diameter and area) from the size at the aperture A(0) at the fiber by the factor m. The position of the lenses 302,304 between the end of the fiber 102 and the image array 106B can be adjusted.

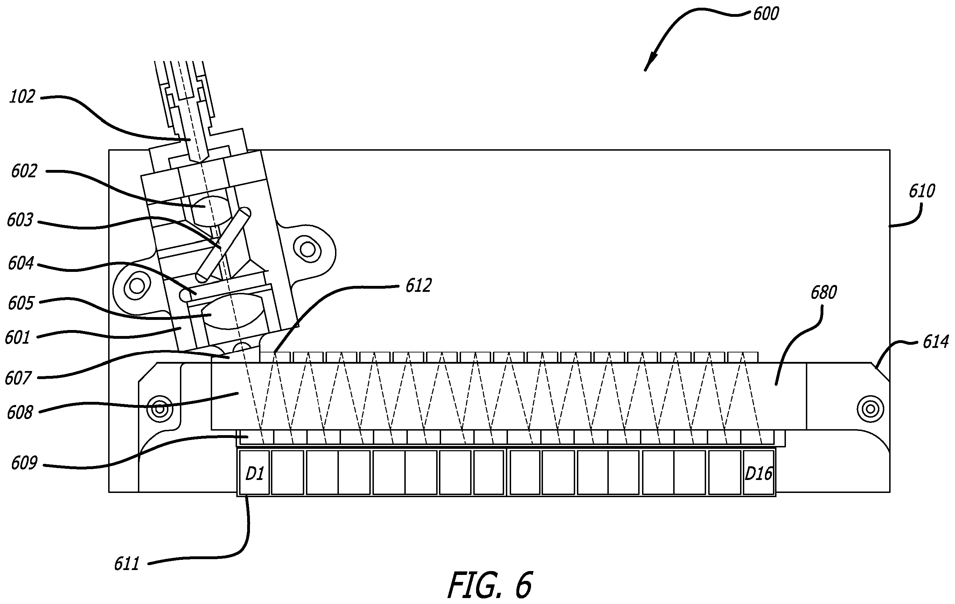

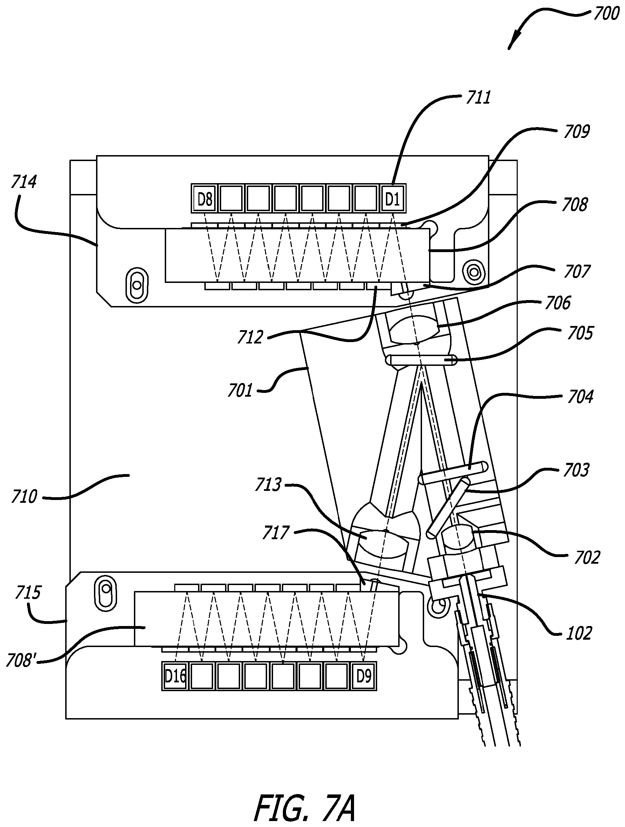

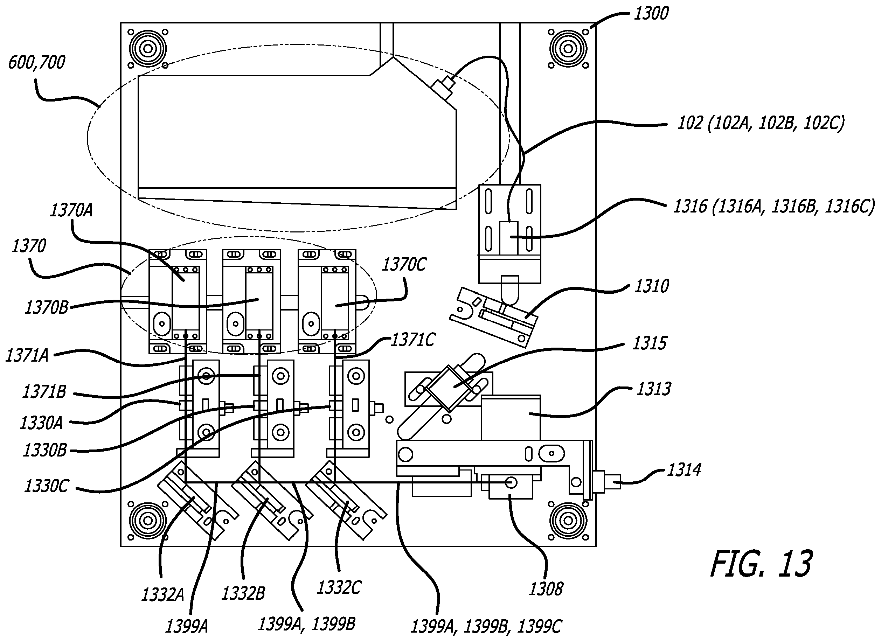

The compact detection module 300 further includes a sixteen (16) channel 1f image array 106B and sixteen (16) detector channels 313A-313P in communication with the image array 106B (e.g., see Figure 6). In an alternate embodiment, a pair of eight (8) channel 1f image arrays (e.g., see Figures 7A-7C) can be used in parallel to relax the imaging requirements of each compact image array. In a flow cytometer, more than one of these compact image arrays (e.g., three) can be used to multiply the number of detector channels to be greater than sixteen (e.g., three times sixteen for forty detection channels) such as explained with the detector modules described with reference to Figure 13).

The image array 106B is formed out of a solid transparent block material. The sixteen (16) channel 1f image array 106B includes sixteen (16) dichroic filters D(1) through D(16) on one side of the transparent block, and fifteen mirrors M(1) through M(15) on an opposite side. The image array does not need a mirror to follow after the last detector channel 313P. Moreover, the last filter D(16) 314 may not be a dichroic filter; instead a bandpass filter can be used. In the case of the band pass filter, the incident light need not be further reflected to another mirror or filter.

Each detector channel 313A-313P (collectively referred to as detector channel 313) in the array or detectors includes a focusing lens 316, and a detector 318 (an instance is shown in Figure 3). The detector 318 is packaged in a thin outline (TO) can package 320 with the focusing lens 316 coupled to or integrated into the TO can package. The focusing lens 316 focuses the fluorescence light passing through the filter down onto a small area size of the detector 318.

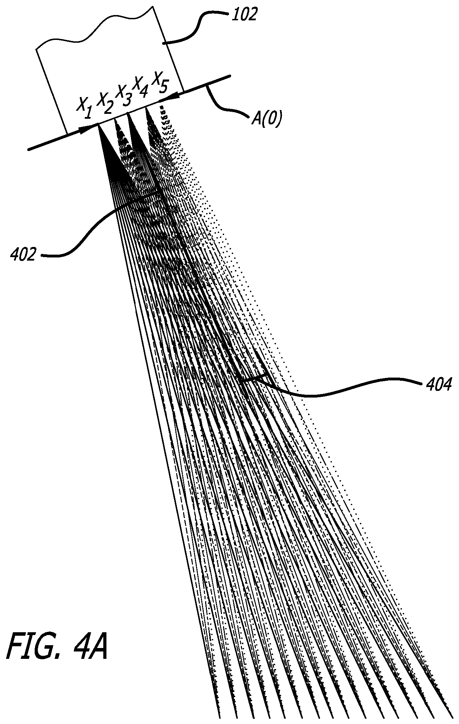

Referring now to Figure 4A, the optical fiber 102 used to transport fluorescent light signals captured from the image chamber to the detector array is a multi-mode optical fiber. Light exits the end surface of a multimode fiber from various (if not all) locations over a diameter of the fiber, such as locations X1 through X5 for example. The lenses 303,304 in the input channel shown in Figure 3, focus light within an aperture A(0) down to a spot A(1) on the first dichroic filter D(1). Because there is a two times (2X) magnification from spot A(0) to spot A(1), the spot size at the aperture A(0) is smaller than the spot size at spot A(1). The different colors for the light rays emanating from the different locations X1 through X5 within the aperture shown in Figure 4A are for clarity only to show how light at the different positions passes through the detector module. As shown in Figure 4A, an optical axis 402 extends out from the circular center of the end of the optical fiber 102. Light is launched out the end of the optical fiber 102 at a launch cone angle (CA) 404 with respect to the optical axis 402.

Figure 3 shows the simulation results of the image array 106B and how light from different locations in the optical beam are alternatively imaged and collimated through the multiple reflections of the mirrors and dichroic filters. While these results show all of the light reflecting, the dichroic filters D(n) at any particular position differ and allow transmission of a light signal (only shown in the last detector channel 313P in Figure 3) according to their respective passband.

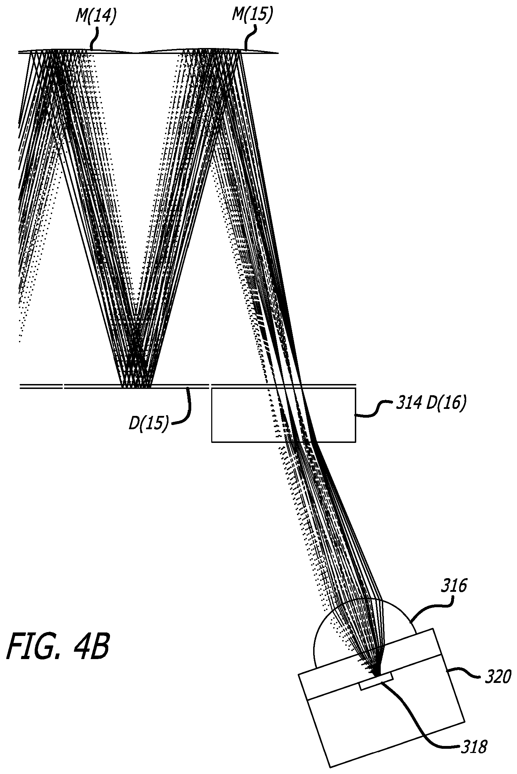

Referring now to Figures 3 and 4B, in each detector channel 313, the desired wavelength range of the light signal passing through a dichroic filter D(n) can be collected through a lens 316 and detected by a small aperture photosensitive detector 318. A further bandpass filter 314 can alternatively or further be used in each detector channel. Other wavelengths of light at the dichroic filter D(n), if any, are reflected to the next micro-mirror M(n) along the chain or row of micro-mirrors. The row or chain of dichroic filters D(n) de-multiplexes different ranges of light wavelengths into the chain of detector channels 313A-313P.

The magnified view of Figure 5 shows simulation results of how the optical light beam is alternatively imaged and collimated through the reflection surfaces of the micro-mirrors and dichroic filters. On the odd numbered dichroic filters (e.g., dichroic filters D(7), D(9), and D(11) shown in Figure 5), the spots are the images of the fiber aperture. That is, the light launched from the fiber aperture is imaged to each filter surface of the odd numbered dichroic filters. On the even numbered dichroic filters (e.g., dichroic filters D(8), D(10), and D(12) shown in Figure 5), the even numbered spots (e.g., spots A(8), A(10), and A(12) shown in Figure 5) are in collimating spaces, where light rays emitting from a point at the fiber aperture becomes a collimated beam. The beam directions in the collimating space at each even numbered dichroic filter are slightly different for different points from the fiber aperture.

In a flow cytometer, one or more linear 16-channel compact wavelength detection modules can be used to detect fluorescent signals of light associated with particles. Alternatively or conjunctively, one or more dual 8-channel compact wavelength detection modules can be used in a flow cytometer to detect fluorescent signals of light associated with particles.

Figures 6 and 7A-7C illustrate embodiments of compact wavelength detection modules having the functionality of the 1f image array 106B shown in Figure 2B. Figure 6 illustrates a linear 16-channel compact wavelength detection module 600. Figures 7A-7C illustrate a dual 8-channel compact wavelength detection module 700.

Referring now to Figure 6, linear 16-channel compact wavelength detection module 600 includes an input stage (head) 601 and a detection module 614 mounted to a base 610. Light is coupled into the input stage (head) 601 by an optical fiber 102. The input stage (head) 601 includes a collimating lens 602, a long pass filter 603, a cleanup optical blocker 604, and a focusing lens 605 mounted to an optical bench. The input stage (head) 601 sets up the magnification m of the initial spot size image A(1) on the first dichroic filter.

From the input stage 601, the light is coupled into a detection module 614. An end of the input stage (head) 601 is coupled to a transparent wedge 607 to receive the light from the focusing lens 605. The input stage (head) 601 and the detection module 614 are coupled to a chassis or base 610 of the flow cytometer to maintain their alignment together.

The detection module 614 includes a 1f image array 608 and a detector/lens array 611. The image array 608 is an embodiment of the image array 106B of Figures 2B and 5. The image array 608 includes a transparent block 680 (e.g., see blocks 806,1006 of Figures 8 and 10) including the wedge 607 and fifteen micro-mirrors 612 on one side. On an opposing side of the transparent block 680, there are sixteen dichroic filters 609. The detector/lens array 611, an embodiment of the plurality of detectors 313A-313P, includes a plurality of photodetectors D1 through D16 (e.g., detector 318 of Figure 3) each having a lens (e.g., lens 316 of Figure 3) to focus the demultiplexed light into the photodetector.

The light that is coupled into the image array 608 by the input stage 601, is wavelength demultiplexed into the detectors D1 through D16 of the detector/lens array 611. The 16-channel detection module analyzes a range of wavelengths (e.g., 400nm to 800nm wavelengths).

To provide a different footprint that better fits a test bench and provide parallel processing, the linear 16-channel compact wavelength detection module 600 can be instead implemented as a dual 8-channel compact wavelength detection module.

Referring now to Figure 7A, a top view of a dual detection module 700 is shown with a pair of 8-channel compact wavelength detection modules 714,715. The compact wavelength detection module 700 includes an input stage (head) 701 in communication with the first 8-channel detection module 714 and the second 8-channel detection module 715 all of which are mounted in alignment to a base 710. The first 8-channel detection module 714 de-multiplexes and analyzes in parallel a first range of wavelengths (e.g., 650nm to 800nm - red wavelengths). The second 8-channel detection module 715 de-multiplexes and analyzes in parallel a second range of wavelengths (e.g., 400nm to 650nm - blue wavelengths).

The light launched from the optical fiber 102 is coupled into the input stage (head) 701. The light from the fiber 102 passes through a collimating lens 702 into a long pass dichroic filter 703. The long pass dichroic filter 703 reflects light at the laser excitation wavelength (e.g., less than 400nm) at a 45-degree angle to a scatter detector (not shown). The side scatter (SSC) light can be focused onto a small aperture detector with a ball lens similar to that described for the fluorescent light. Fluorescent light in the fluorescent light spectrum (e.g., 400nm-800nm) passes through the long pass filter 703 and into a second cleanup filter 704. The cleanup filter 704 ensures that no excitation laser light reaches the de-multiplexing detection modules 714-715.

After the cleanup filter 704, the fluorescent light is separated into a long- wavelength band and a short-wavelength band by a long pass filter 705. The long-wavelength light (e.g., red - 650nm to 800nm) passes through the long-pass filter 705 and is focused into the first detection module 714 by a collimating/focusing lens 706. The long wavelength portion of light that passes that is focused by focusing lens 706 is de-multiplexed by the first detection module 714. The short-wavelength light band (e.g., blue - 400nm to 650nm) is reflected by the long pass filter 705 back at an angle into a collimating/focusing lens 713. The collimating/focusing lens 713 focuses the short wavelength band of light into the second detection module 715. The short wavelength portion reflected by long-pass filter 705 is de-multiplexed by the second detection module 715. Alternatively, the filter 705 can be a short-pass filter and the short wavelength light passes through the filter and is de-multiplexed by the first detection module 714 while long wavelength light is reflected by the filter and is de-multiplexed by the second detection module 715.

Referring to the first detection module 714, light from the focusing lens 706 enters normal to a 12-degree wedge face 707, and passes through the transparent block (e.g., block 806 of Figure 8) of the image array 708, before imaging onto the first dichroic or bandpass filter 709. Light passes through the bandpass filter 709 and is focused onto a first small area detector D1 in the detector/lens array 711. The light rejected by the bandpass filter 709 is reflected back onto a first micro-mirror M(1) 712 of a plurality of micro-mirrors M(1) through M(7) in the image array. The first micro-mirror M(1) 712 collimates and reflects the light back onto a second detection module D2 and so on and so forth down the serial chain of micro-mirrors and detection modules of the transparent block of image array 708. The second detection module 715 functions similarly to the first detection module 714.

Reflections progress through the image array 106B,708,708' in each of the first detection module 714 and the second detection module 715 as described herein, alternately focusing and collimating the light with successively shorter band-passes of light through the dichroic filters into odd and even detectors 118, respectively in the odd and even detector channels. Accordingly, different wavelengths are de-multiplexed by the plurality of detectors in each of the first detection module 714 and second detection module 715.

For a given fluorescent event, signals from each detector (e.g., detector 318 shown in Figure 4B, lens/detector D1 through D16 in Figures 6-7) is amplified, digitized and synchronized by an electronics system to provide a spectral representation of the input fluorescent light signal. Integration of the detection electronics into the optical module assembly allows compact design and lower noise by minimizing the coupling length of detector and amplification circuit. The detector 318 shown in Figure 4B converts an optical signal, such as the input fluorescent light signal, into an electrical signal.

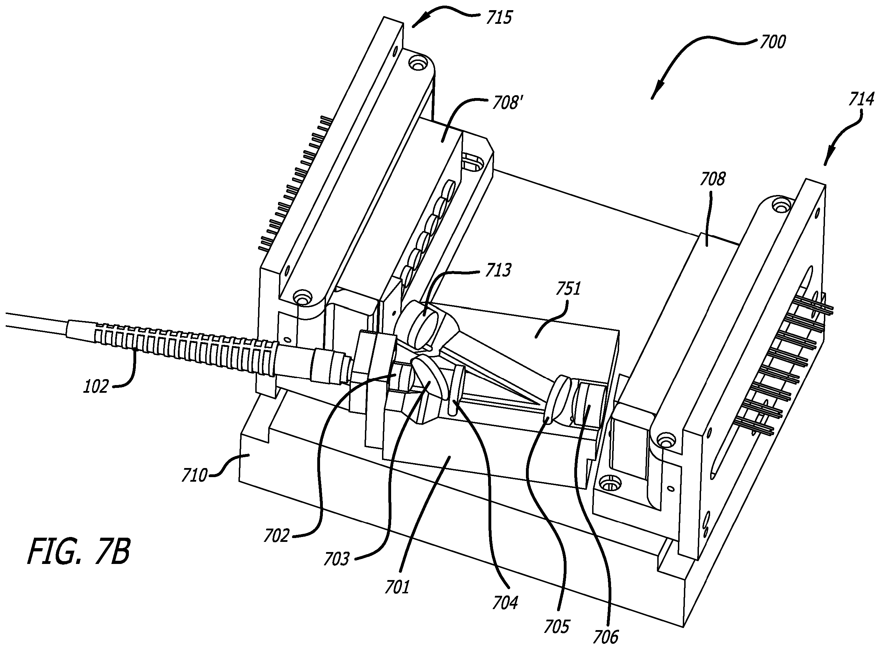

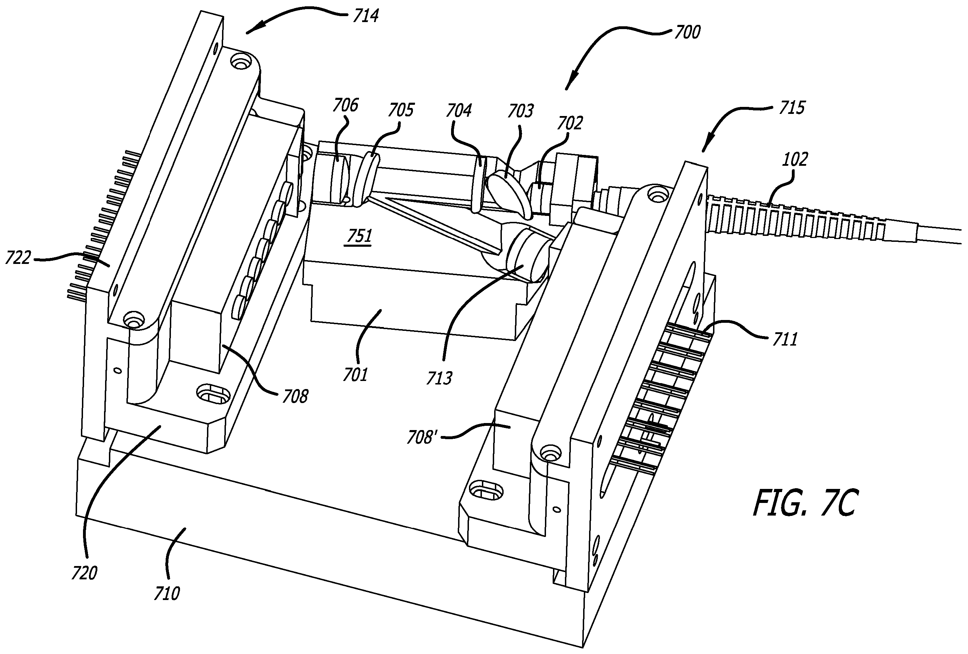

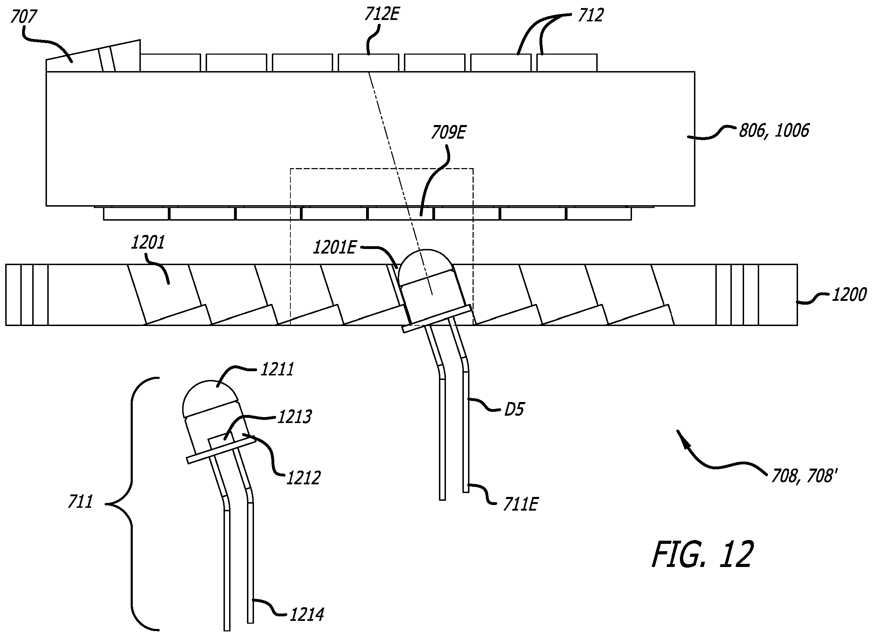

Figures 7B and 7C respectively illustrate right and left perspective views of the dual detection module 700 with the pair of 8-channel compact wavelength detection modules 714,715. Each of the detection modules 714,715 includes a mounting base 720 and a cover 722 to enclose a mounting block 1200 (see Figure 12) to which the lens/detectors 711 in the detector array or chain is mounted. The mounting base 720 and cover 722 keeps the elements of the image array 708,708' in the transparent block 806,1006 aligned together with the detector array in each detector module 714,715. The mounting base 720 of each detection module 714,715 is coupled to the base 710 by a plurality of fasteners.

The input stage 701 includes an optical bench 751 with a plurality of filter slots to receive filters 703-705; a plurality of lens slots to receive lenses 702,706,713; and one or more light channels along which light is reflected and propagates through the filters and lenses. The optical bench 751 is coupled to the base 710 of the detection module 700 to maintain alignment with the detection modules 714-715.

Figure 13 shows a top view of an optical plate assembly 1300 in a modular flow cytometry system 100. The optical plate assembly 1300 includes a laser system 1370 having three semiconductor lasers 1370A, 1370B, 1370C that direct excitation into a flow cell assembly 1308 where a sample fluid flows with sample particles. The laser system 1370 attempts to direct the multiple (e.g., three) laser beams in a co-linear manner toward the flow cell assembly 1308. However, the multiple laser beams can be slightly offset from one another. The laser system 1370 includes semiconductor lasers 1370A, 1370B, 1370C having wavelengths typically at about 405 nanometers (nm), 488 nm, and 640 nm. The output power of the 405 nm semiconductor laser is usually larger than 30 milliwatts (mW); the output power of the 488 nm semiconductor laser is usually greater than 20 mW; and the output power of the 640 nm semiconductor laser is usually greater than 20 mW. Controller electronics control the semiconductor lasers to operate at a constant temperature and a constant output power.

An optical system spatially manipulates the optical laser beams 1371A, 1371B, 1371C generated by the semiconductor lasers 1370A, 1370B, 1370C respectively. The optical system includes lenses, prisms, and steering mirrors to focus the optical laser beams onto a fluidic stream carrying biological cells (bio cells). The focused optical laser beam size is typically focused for 50-80 microns (µm) across the flow stream and typically focused for 5-20 µm along the stream flow in the flow cell assembly 1308. In Figure 13, the optical system includes beam shapers 1330A-1330C that receive the laser light 1371A, 1371B, 1371C from the semiconductor lases 1370A-1370C, respectively. The laser light output from the beam shapers 1330A-1330C are coupled into mirrors 1332A-1332C respectively to direct the laser light 1399A, 1399B, 1399C towards and into the flow cell assembly 1308 to target particles (e.g. biological cells) stained with a dye of fluorochromes. The laser light 1399A, 1399B, 1399C is slightly separated from each other but directly substantially in parallel by the mirrors 1332A-1332C into the flow cell assembly 1308.

The laser light beams 1399A, 1399B, 1399C arrive at the biological cells (particles) in the flow stream in the flow cell assembly 1308. The laser light beams 1399A,1399B,1399C are then scattered by the cells in the flow stream causing the fluorochromes to fluoresce and generate fluorescent light. A forward scatter diode 1314 gathers on-axis scattered light. A collection lens 1313 gathers the off-axis scattered light and the fluorescent light and directs them together to a dichromatic mirror 1310. The dichromatic mirror 1310 focuses the off-axis scattering light onto a side scatter diode 1315. The dichromatic mirror 1310 focuses the fluorescent light onto at least one fiber head 1316. At least one fiber assembly 102 routes the fluorescent light toward at least one detector module 600,700.

For a more detailed analysis of a biological sample using different fluorescent dyes and lasers wavelengths, multiple fiber heads 1316, multiple fiber assemblies 102, and multiple detector modules 600,700 can be used. Three fiber heads 1316A, 1316B, 1316C can be situated in parallel to receive the fluorescent light and three fiber assemblies 102A, 102B, 102C can be used to direct the fluorescent light to three detector modules 600A,600B,600C or 700A,700B,700C.

The three fiber heads 1316A,1316B,1316C (and three fiber assemblies 102A,102B,102C) are enabled because the three laser light beams 599A,599B,599C are slightly offset (e.g., not precisely co-linear). Accordingly, three fiber heads 1316A,1316B,1316C can collect light beam data separately from the three laser light beams 599A,599B,599C, which have three different wavelengths. The three fiber assemblies 102A, 102B, 102C then direct light into three different detector modules (e.g., three different detector modules 600A,600B,600C or 700A,700B,700C).

Alternatively, the modular flow cytometry system can use one detector module 600,700 to collect the light beam data. For example, the three fiber assemblies 102A,102B,102C can direct light into one detector module 600,700, as opposed to three different detector modules. Separation of the light beam data is then handled as data processing operations, instead of separating the light beam data by using three different detector modules. Using one detector module may be less complex from a physical device standpoint. However, the data processing operations can be more complex because separation of the light beam data requires more data manipulation (e.g., identifying different wavelengths and separating light beam data accordingly).

Cell geometric characteristics can be categorized though analysis of the forward and side scattering data. The cells in the fluidic flow are labeled by dyes of visible wavelengths ranging from 400 nm to 900 nm. When excited by the lasers, the dyes produce fluorescent lights, which are collected by a fiber assembly 102 and routed toward a detector module 600,700. The modular flow cytometry system maintains a relatively small size for the optical plate assembly via compact semiconductor lasers, an 11.5X power collection lens 1313, and the compact image array in the detector modules 600,700.

The collection lens 1313 contributes to the design of the detector modules 600,700. The collection lens 1313 has a short focal length for the 11.5X power. The collection lens 1313, an objective lens, has a high numerical aperture (NA) of about 1.3 facing the fluorescence emissions to capture more photons in the fluorescence emissions over a wide range of incident angles. The collection lens 1313 has a low NA of about 0.12 facing the collection fiber 102 to launch the fluorescent light into the fiber over a narrow cone angle. Accordingly, the collection lens 1313 converts from a high NA on one side to a low NA on the opposite side to support the magnification m in the input channel of the detector module 600,700.

The diameter of the core of the collection fiber assembly 517 is between about 400 µm and 800 µm, and the fiber NA is about 0.12 for a core diameter of about 600 µm. The fiber output end can be tapered to a core diameter of between about 100 µm and 300 µm for controlling the imaging size onto the receiving photodiode.

The input end of the collection fiber 102 can also include a lensed fiber end to increase the collection NA for allowing use of a fiber core diameter that is less than about 400 µm. Because the fiber 102 has the flexibility to deliver the light anywhere in the flow cytometer system, the use of fiber for fluorescence light collection enables optimization of the location of the receiver assembly and electronics for a compact flow cytometer system.

To manufacture a low cost flow cytometer, lower cost components can be introduced. The image array 106B in each detection module 614,714,715 is formed out of a solid transparent material to provide detection module that is reliable, low cost, and compact. Furthermore, the flow cytometer uses low cost off the shelf thin outline (TO) can detectors.

Referring now to Figure 12, a mounting block 1200 is shown adjacent the transparent block 806,1006 (see Figures 8-11) that are coupled together to form the 1f image array 708,708' that is to be mounted by the mounting base 720 and cover 722 to the base 710 of the compact detector module 700 shown in Figures 7A-7C. The mounting block 1200 includes a plurality of angled curved openings 1201 to receive a plurality of TO can lens/detectors 711. The alignment of the mounting block 1200 with the transparent block 806,1006 of the imaging array 708 and the angle of the angled curved openings 1201 is such that light reflected off a micro-mirror 712E can be bandpass filtered by a dichroic filter 709E and coupled into a lens/detector 711E.

Each TO can lens/detector 711 of the plurality includes a focusing lens 1211 and a low cost TO can detector 1212 coupled together. The TO can detector 1212 includes a window top and a semiconductor photodetector 1213 inside the TO can package. The semiconductor photodetector 1213 is electrically coupled to a plurality of electrical pins 1214 that extend outside the TO can package to which the other electronics of the flow cytometer electrically couple. Like the detector 318 shown in Figure 4B, the semiconductor photodetector 1213 converts an optical signal, such as the input fluorescent light signal, into an electrical signal on at least one electrical pin 1214.

Referring now to Figure 8, a perspective view of a transparent block 806 formed out of a solid transparent material 800 is shown for an embodiment of the 1f image array 106B,608,708,708'. The solid transparent material 800 used for the transparent block 806 can be clear glass or clear plastic, for example. A plurality of micro-mirrors 810 in a row and serial chain is formed into or on one side of the transparent block 806 of transparent material 800. A plurality of dichroic or bandpass filters 812 in a row and serial chain are formed into or on an opposing side of the transparent block 806 of transparent material 800. Each dichroic or bandpass filter 812 is tuned to a different range of wavelengths of light to allow detection of a broad range of fluorescent light being emitted by fluorochromes. In one embodiment, the plurality of micro-mirrors 810 are concave spherical mirrors.

The transparent block 806 formed out of the solid transparent material 800 further includes a 12-degree wedge face 820 to receive light from a focusing lens, such as described with the 1f imaging array 708. The light enters normal to the surface of the wedge face 820 and is directed (bent) towards the first dichroic or bandpass filter D(1). The light passes through the transparent block 806 to reach the first dichroic or bandpass filter D(1).

Referring now to Figure 10, a perspective view of a transparent block 1006 is shown formed out of the solid transparent material 800 for another embodiment of the 1f image array 106B,608,708,708'. The solid transparent material 800 used for the transparent block 1006 can be clear glass or clear plastic, for example. A plurality of micro-mirrors 1010 are concave rectangular mirrors formed into a side of the transparent material. A plurality of dichroic or bandpass filters 1012 are formed into or on an opposing side of the transparent material 800. Each dichroic or bandpass filter 812 is tuned to a different range of wavelengths of light to allow detection of a broad range of fluorescent light being emitted by fluorochromes.

The solid transparent material 800 further includes a 12-degree wedge face 820 to receive light from a focusing lens, such as described with the image array 708. The light enters normal to the surface of the wedge face 820 and directed (bent) towards the first dichroic or bandpass filter D(1). The light passes through the block to reach the first dichroic or bandpass filter D(1).

Referring now to Figure 9A, a cross section view illustrates the distance (e.g., thickness L) between the spherical micro-mirror 810 on one side and the opposite side of the transparent block 806. An axis 814 perpendicular to the transparent block at the center of the spherical micro-mirror 810 extends out to the opposite side of the transparent block 806. Figure 9B illustrates an axis 815 perpendicular to the transparent block at the center of the dichroic or bandpass filter 812. The axis 815 extends out to the opposite side of the transparent block 806 of transparent material 800. The axes 814 and 815 are parallel to each other.

A reflective material 811 is formed (e.g., disposed) on a spherical transparent micro-lens shape of the solid transparent material 800 to form each spherical micro-mirror 810 in one side of the transparent block 806. The dichroic or bandpass filter 812 is coupled to the material 800 in an opposite side of the transparent block 806.

Figure 11 similarly shows the distance and the axis 1014 between the concave rectangular micro-mirror 1010 on one side and the opposite side of the transparent material 800 forming the transparent block 1006. Figure 11 further illustrates an axis 1015 perpendicular at a center point of the dichroic or bandpass filter 1012. The optical axis 1015 extends out to the opposite side of the transparent block 1006 formed by the transparent material 800. The optical axes 1014 and 1015 are parallel to each other.

Figure 11 further shows a reflective material 1011 is formed (e.g., disposed) on a curved transparent rectangular shape of the solid transparent block 1006 formed out of the transparent material 800 to form the rectangular micro-mirror 1010. The dichroic or bandpass filter 1012 is coupled to an opposite side of the solid transparent block 1006.

The fluorescence dyes used in flow cytometry applications covers the entire visible and near infrared wavelength range. The emission wavelength bandwidth is typically large for long wavelength fluorochromes. Each of the dichroic or bandpass filters 812 can have their detector filter passbands and center wavelength optimized to measure different dyes with the same amount of spectral sampling. Furthermore, individual filter optimization allows exclusion of excitation wavelengths from other lasers. In this way, the detector in each channel can be utilized fully to detect the signal of interest. In conjunction with a fluorescence spectral unmixing algorithm executed by a processor of a computer, the individual and optimized passband detection provides the ultimate detection of a large number of fluorescent dyes of interest.

### METHODS OF USING VARIOUS DETECTION SYSTEMS

Methods of using the various detection systems disclosed herein in a flow cytometer are now described. Before launching the fluorescent light generated by fluorochromes excited by laser light out of the end of the optical fiber 102 shown in the figures, the fluorescent light of different wavelengths is generated by various fluorochromes marking different particles in a sample in a flow channel that are excited by laser light. The fluorescent light that is generated is received by a collection lens near the opposite end of the laser as can be seen in Figure 13. A converter is used to convert from a first numeric aperture on the capture side to a second numeric aperture less than the first numeric aperture to better match the numeric aperture of the optical fiber. The optical fiber then directs the fluorescent light towards the end of the optical fiber to flexibly direct it towards the compact detection module 600,700.

The optical fiber 102 couples the fluorescent light into the end of the optical fiber thereby launching it out from the optical fiber. The launched fluorescent light has different wavelengths generated by the different fluorochromes attached to different particles in the sample fluid that have been excited by laser light.

In an input channel, the light launched from the end of the optical fiber is collimated and focused by a lens towards the first dichroic filter of a first plurality of dichroic filters in a first de-multiplexing imaging array.

Further along the input channel, the laser light used to excite the different fluorochromes that is launched from the optical fiber is blocked from interfering with detecting the wavelengths of fluorescent light by a blocking device.

Further along the input channel, an image size from an end of the optical fiber is magnified to a spot size for a first dichroic filter in a serial chain or row of the first plurality of dichroic filters in the first de-multiplexing imaging array.

In the first de-multiplexing imaging array, a first wavelength range of the fluorescent light is alternatively reflected between the first plurality of dichroic filters and a serial chain or row of a first plurality of micro-mirrors to collimate the fluorescent light on odd numbered dichroic filters and re-image the fluorescent light on even numbered dichroic filters. A focal length of the first plurality of micro-mirrors and a distance of separation between the first plurality of dichroic filters and the first plurality of micro-mirrors provides a telescopic effect along the chain of micro-mirrors to collimate the fluorescent light on the odd numbered dichroic filters and re-image the fluorescent light on the even numbered dichroic filters.

In the serial chain or row of the first plurality of dichroic filters, different wavelength ranges of the first wavelength range of the fluorescent light is band passed at each to de-multiplex the wavelength spectrum of the first wavelength range of the fluorescent light.

Adjacent the serial chain or row of the first plurality of dichroic filters is a serial chain or row of plurality of detector channels as shown in Figures 3, 6, and 7A-7C with a first plurality of light detectors or photo-detectors. Each detector channel has a lens to focus the different wavelength ranges of the fluorescent light into a first plurality of light detectors or photo-detectors.

The serial chain or row of plurality of photo-detectors detects the fluorescent light in each of the different wavelength ranges of the first wavelength range associated with each fluorochrome tagged to a particle. The plurality of light detectors convert the fluorescent light received by each into an analog electrical signal. Each analog electrical signal can then be digitized/converted from an analog electrical signal into a digital electrical signal by an analog-digital (A/D) converter, then analyzed and counted.

With the fluorescent light converted into analog electrical signals by the detectors and digitized into digital electrical signals, a computer with a processor can then be used to count a number of each of the different particles in the sample fluid such as disclosed in Application No. 15/498,397 titled COMPACT MULTI-COLOR FLOW CYTOMETER filed on April 26, 2017 by David Vrane et al..A second and/or third de-multiplexing imaging array may be used in parallel with the first de-multiplexing imaging array. In this case, the methods further include splitting the fluorescent light into the first wavelength range of the fluorescent light for the first de-multiplexing imaging array, a second wavelength range of the fluorescent light for the second de-multiplexing imaging array, and/or a third wavelength range of the fluorescent light for the third de-multiplexing imaging array. Such as shown in Figure 13, a first optical fiber 102A may be used to direct fluorescent light towards the first de-multiplexing imaging array. A second optical fiber 102B may be used to direct fluorescent light towards the second de-multiplexing imaging array. A third optical fiber 102B may be used to direct fluorescent light towards the third de-multiplexing imaging array.

The steps described herein for the first de-multiplexing imaging array may be concurrently performed by the second and/or third de-multiplexing imaging arrays so different additional ranges of wavelengths may be analyzed. For brevity, the repeated steps are not repeated but incorporated here by reference.

### COMPUTER SYSTEM OVERVIEW

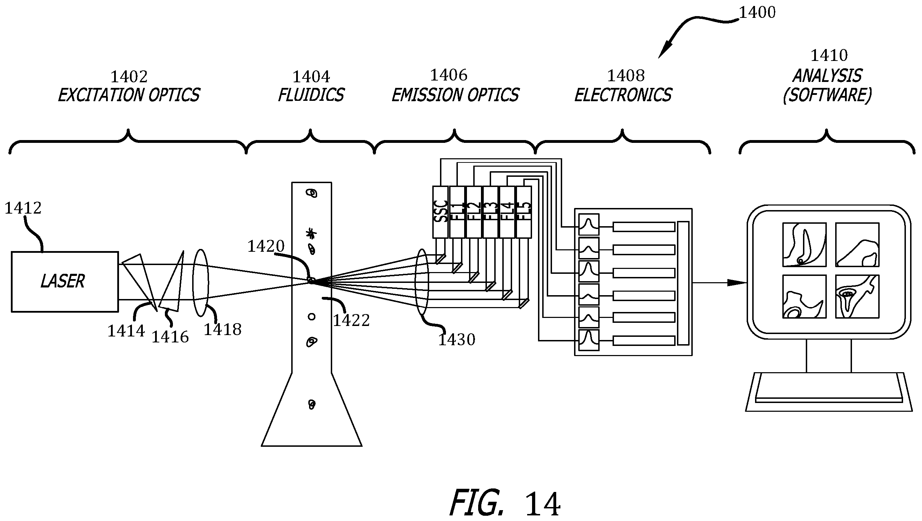

Referring now to Figure 14, a basic conceptual diagram of a flow cytometer system 1400 is shown. Various embodiments of the flow cytometer 1400 may be commercially available. Five major subsystems of the flow cytometer system 1400 include an excitation optics system 1402, a fluidics system 1404, an emission optics system 1406, an acquisition system 1408, and an analysis system 1410. Generally, a "system" includes hardware devices, software,, and/or a combination thereof.

The excitation optics system 1402 includes, for example, a laser device 1412, an optical element 1414, an optical element 1416, and an optical element, 1418. Example optical elements include an optical prism and an optical lens. The excitation optics system 1402 illuminates an optical interrogation region 1420. The fluidics system 1404 carries fluid samples 1422 through the optical interrogation region 1420. The emission optics system 1406 includes, for example, an optical element 1430 and optical detectors SSC, FL1, FL2, FL3, FL4, and FL5. The emission optics system 1406 gathers photons emitted or scattered from passing particles. The emission optics system 1406 focuses these photons onto the optical detectors SSC, FL1, FL2, FL3, FL4, and FL5. Optical detector SSC is a side scatter channel. Optical detectors FL1, FL2, FL3, FL4, and FL5 are fluorescent detectors may include band-pass, or long-pass, filters to detect a particular fluorescence wavelength. Each optical detector converts photons into electrical pulses and sends the electrical pulses to the acquisition system 1408. The acquisition system 1408 processes and prepares these signals for analysis in the analysis system 1410.

Figures 1-13 described herein include exemplary elements of the excitation optics system 1402, the emission optics system 1406, and the acquisition system 1408 of the flow cytometer 1400. US Patent Application No. 15/817,277 titled FLOW CYTOMETERY SYSTEM WITH STEPPER FLOW CONTROL VALVE filed on November 19, 2017 by David Vrane describes exemplary elements of the fluidics system 1404 .The analysis system 1410 can store digital representations of signals for analysis after completion of their acquisition by the acquisition system 1408. The analysis system 1410 is a computer including a display device, at least one processor, a scratch pad memory, and one or more storage devices that are non-volatile that can more store data (including signal data) and software on a more semi-permanent basis.

The one or more storage devices of the analysis system can store analysis software that has instructions that can be executed by the processor to obtain laboratory results of biological samples (or other types of samples, e.g., chemical) that are analyzed. The analysis system 1410 and analysis software can be further used to calibrate the flow cytometer with compensation controls when initialized with control particles run through the flow cytometer, before running a biological sample through the flow cytometer. The analysis software has instructions that are executed by the processor to analyze the stored signal data that was acquired by the acquisition system 1408 during calibration with controls that are run through the flow cytometer. The analysis software also has instructions that are executed by the processor to analyze the stored signal data that was acquired by the acquisition system 1408 during analysis of a biological sample that, after calibration of the flow cytometer, is then run through the flow cytometer.

### METHOD OVERVIEW

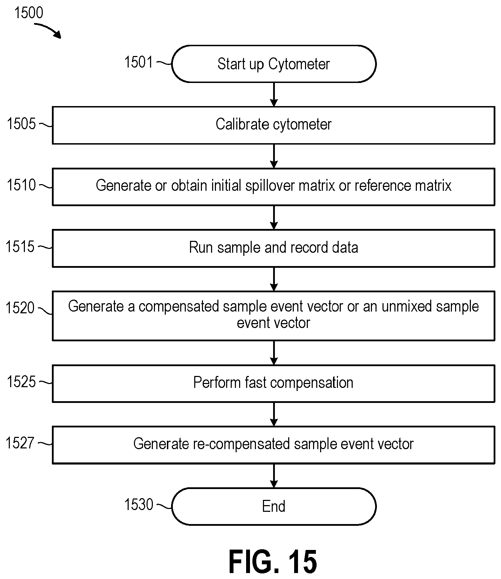

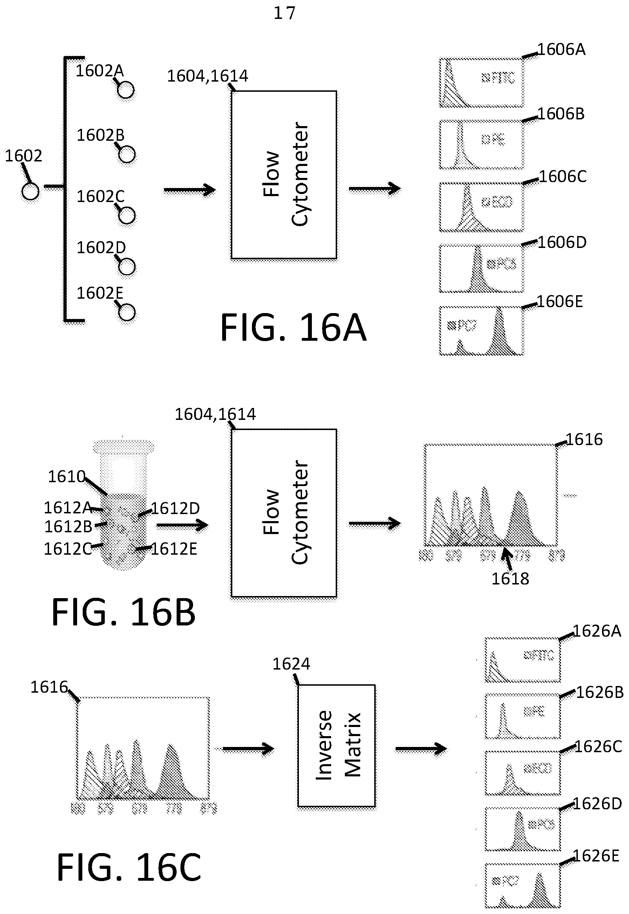

Referring now to Figures 15 and 16A-16C, a flowchart of a method 1500 for performing flow cytometry with fast compensation is now described. For example, the flow cytometry system 1400 of Figure 14 may carry out the method 1500. Flow cytometry allows for rapid multiparameter collection and analysis of data on single cells or particles in a sample fluid.

In step 1501 shown in Figure 15, the flow cytometry system starts the flow cytometer 1604,1614 and checks the performance of the flow cytometer. The flow cytometer can be a conventional flow cytometer 1604 or a spectral flow cytometer 1614. The conventional flow cytometer 1604 traditionally uses mirrors, optical filters, and photomultiplier tubes (PMT) to capture or sense signal data. The spectral flow cytometer 1614 is based on similar principles but instead generally uses a multichannel detector (e.g., charge-coupled device (CCD)) with a means to disperse the light spectrum across the plurality of channels into the detectors.

In step 1505, the system begins calibration of the flow cytometer 1604,1614 as illustrated by Figure 16A. The system uses one or more single stained reference or compensation controls 1602A-1602E collectively referred to as single stained reference or compensation controls 1602 that are run one at a time through the flow cytometer 1604,1614. The one or more single stained reference controls 1602A-1602E separately generate spectral profiles or signatures 1606A-1606E from the respective various auto-luminescence or luminescence of fluorochromes tagged to the control particles.

In step 1510, during calibration, the system uses the single stained compensation controls 1602 to generate an initial spillover matrix for the conventional flow cytometer 1604 or an initial reference matrix for the spectral flow cytometer 1614. When performing multicolor flow cytometry, the system uses single stained samples 1602 run through a flow cytometer 1604,1614 to determine the levels of compensation, such as shown in Figure 16A. Single staining of the particles 1602 can reveal the spectral profile or signature 1606A-1606E of a fluorochrome to the fluorescent photo-detectors of the flow cytometer. This allows the system and/or user to compensate for overlapping in the spectral profile (e.g., see the overlap 1616 in Figure 16B) of the fluorescence from a sample 1610 due to multi-stained cells or particles 1612A-1612E contained therein, such as shown in Figure 16B.

The staining of the compensation controls 1602 must be as bright as or brighter than the particles 1612A-1612E in the sample 1610. Antibody capture beads can be substituted for cells and one fluorophore conjugated antibody for another, if the fluorescence measured is brighter for the control. The exceptions to this are tandem dyes, which cannot be substituted. Tandem dyes from different vendors or different batches must be treated like separate dyes, and a separate single-stained control should be used for each because the amount of spillover may be different for each of these dyes. Also, the compensation algorithm should be performed with a positive population and a negative population. Whether each individual compensation control contains beads, the cells used in the experiment, or even different cells, the control itself must contain particles with the same level of autofluorescence. The entire set of compensation controls may include individual samples of either beads or cells, but the individual samples must have the same carrier particles for the fluorophores. Also, the compensation control uses the same fluorophore as the sample. For example, both green fluorescent protein (GFP) and Fluorescein isothiocyanate (FITC) emit mostly green photons, but have vastly different emission spectra. Accordingly, the system cannot use one of them for the sample and the other for the compensation control. Also, the system must collect enough events to make a statistically significant determination of spillover (e.g., about 5,000 events for both the positive and negative population).

During calibration in a conventional flow cytometer 1604, the system obtains an initial spillover matrix from the single stained reference controls 1602 that are run one at a time through the conventional flow cytometer. In a conventional flow cytometer 1604, the fluorescence signals (e.g., colors) are separated out into discrete fluorescent bands 1606A-1606E using a series of edge filters and dichroic mirrors. The system detects (e.g., measures) each individual channel with a photo multiplying tube (PMT). Ideally the fluorescent bands would be completely discrete, but that is not reality. During detection of the fluorescent signals in the controls 1602 (as well as the sample 1610), "spillover" can occur between fluorescent bands, such as shown in the combined profile 1616. The system defines the spillover (e.g., spillover 1618 between the discrete bands for the combined profile 1616 shown in Figure 16B) between the fluorescent bands with a spillover matrix [S].

Alternatively, during calibration in a spectral flow cytometer 1614, the system obtains an initial reference matrix from the single stained reference controls 1602 that are run through the spectral flow cytometer. Spectral flow cytometry is a technique based on conventional flow cytometry but where a spectrograph and multichannel detector (e.g., charge-coupled device (CCD)) are substituted for the traditional mirrors, optical filters and photomultiplier tubes (PMT) of conventional flow cytometer systems. In the spectral flow cytometer, the side scattered light and fluorescence is collected and coupled into a spectrograph, either directly or through an optical fiber, where the whole light signal is dispersed and displayed as a high-resolution spectrum on the CCD or multichannel detector.

In step 1515, with reference to Figures 15 and 16B, the system runs the sample 1610 through the flow cytometer 1604,1614. The system generates, obtains, and/or records data (e.g., event data) representing the spectral profile 1616 based on the sample fluid 1610. For example, fluoresced cells in the sample fluid flowing through the flow cytometer are detected. Each detection of a fluoresced cell is an event. The event data may be defined according to a measured sample event vector.

In step 1520, the system generates a compensated sample event vector (for conventional flow cytometer 1604) or an unmixed sample event vector (for spectral flow cytometer 1614) to count the number of various types of cells or particles in a sample 1610 to obtain a measure of concentration. Generally as shown in Figure 16C, an inverse matrix 1624 (determined from the initial spillover matrix and/or the initial reference matrix with fine adjustments) is used on the event data representing the spectral profile 1616 to generate the compensated sample event vector or the unmixed sample event vector representing separate spectral profiles or signatures 1606A-1606E of the various auto-luminescence or luminescence of fluorochromes tagged to the various cells 1612A-1612E in the sample 1610.

For the conventional flow cytometer 1604, the system calculates the compensated event vector based on the initial spillover matrix and the measured sample event vector. For the spectral flow cytometer 1614, the system calculates the unmixed sample event vector based on the initial reference matrix and the measured sample event vector.

Unfortunately, the initial spillover matrix and the reference matrix tend to be insufficiently accurate to yield reliable results. Accordingly, in step 1525, the system performs fast compensation. For a conventional flow cytometer 1604, this step includes compensating for inaccuracies of the initial spillover matrix. For a spectral flow cytometer 1614, this step includes compensating for inaccuracies of the initial reference matrix.

In step 1527, based on the fast compensation, the system generates a re-compensated sample event vector in a quicker manner that previously performed. The method 1500 then ends at step 1530 but one or more steps can be repeated for other samples for similar dates/times of calibration/sampling with the flow cytometer.

### OBTAINING SPILLOVER MATRIX FROM SINGLE STAIN CONTROLS FOR A CONVENTIONAL FLOW CYTOMETER

Accordingly, the system can include a conventional flow cytometer to generate or obtain a spillover matrix from single stained controls. The steps for generating or obtaining a spillover matrix by using a conventional flow cytometer are further discussed.

Assume matrix [*S*] is an N×N dimensional spillover matrix obtained from single stained compensation controls, where N is the number of fluorescent detectors. Example compensation controls include beads 1602 stained or dyed with fluorochromes such as fluorescein isothiocyanate (FITC), R-phycoerythrin (PE), Peridinin Chlorophyll Protein Complex (PerCP), phycoerythrin and cyanine dye (PE-Cy7), Allophycocyanin (APC), and a tandem fluorochrome combining APC and cyanine dye (APC-Cy7).

Assume vector {*U*} is a measured sample event vector with N values, each of which is from one of the N detectors detecting a compensation control (e.g., FITC, PE, PerCP, PE-Cy7, APC, APC-Cy7).

Assume vector {*V*} is the compensated sample event vector with N values. The measured sample event vector {*U*} is equal to the spillover matrix [S] multiplied with the compensated sample event vector {*V*}. This can be represented with the following matrix relationship with the measured sample event vector {*U*}: $\left[S\right] \left\{V\right\} = \left\{U\right\}$

Therefore, with the inverse spillover matrix [*S*]⁻¹, the compensated sample event vector {V} can be obtained from the matrix equation: $\left\{V\right\} = {\left[S\right]}^{- 1} \left\{U\right\}$

An initial spillover matrix [*S*] can be obtained by measuring each single stained control (e.g., FITC, PE, PerCP, PE-Cy7, APC, APC-Cy7) at each detector to obtain the following matrix: $\left[S\right] = \left[\begin{matrix}1.0 & {S}_{1 , 2} & … & {S}_{1 , n} \\ {S}_{2 , 1} & 1.0 & … & {S}_{2 , n} \\ ⋮ & ⋮ & ⋮ & ⋮ \\ {S}_{n , 1} & {S}_{n , 2} & … & 1.0\end{matrix}\right]$ In the subscript x,y in Eq. 3, the x value represents the detector number. The y value of the subscript x,y in Eq. 3 represents the column associated with a single stained control.

Each column in the initial spillover matrix [S], a separation of variables (SOV) matrix, corresponds to one single stained control (e.g., FITC, PE, PerCP, PE-Cy7, APC, APC-Cy7). For example, column one corresponds to FITC single stained control. As another example, column two corresponds to PE single stained control; and so on for each single stained control that is run to calibrated the flow cytometer. Each row in the initial spillover matrix [S] corresponds to a given detector number. For example, row one corresponds with detector 1. Row two corresponds to detector 2, and so on.

In general, the initial spillover matrix that is generated is not accurate enough to accurately separate spectrum and identify cells or particles. Accordingly, fine adjustment of the non-diagonal element values of the initial spillover matrix [S] is needed (e.g., fine adjustment to the initial spillover matrix [S] generating an adjusted spillover matrix [S]' and its associated inverse, the adjusted compensation matrix [C]'). The fine adjustments may be made based on experience and judgment of the lab technician/operator. The fine adjustments are often made to correct the distortion caused by either the interactions of fluorochromes stained on the same cells or particles, or by the system for the measurements of the single stained and unstained controls, or by both distortions caused by the interactions and the system.

Assume an adjustment matrix [D] is the fine adjustments to be made (e.g., added) to the non-diagonal element values of the initial spillover matrix [S]. A re-compensated event vector {V_{R}} for a conventional flow cytometer can be determined from the matrix equation {*V_{R}*} *=* [[*S*] *+* [*D*]]⁻¹{*U*}*.*

### OBTAINING UNMIXED EVENT LIST DATA FOR A SPECTRAL FLOW CYTOMETER

Alternatively, the system can include a spectral flow cytometer 1614 to generate or obtain unmixed event list data. The steps for generating or obtaining unmixed event list data by using a spectral flow cytometer are further discussed.

Assume [*R*] is an N×M initial reference matrix for the spectral flow cytometer obtained from single stained reference controls, where N is the number of detectors, M is the number of fluorochromes ((e.g., FITC, PE, PerCP, PE-Cy7, APC, APC-Cy7) to be measured with M always less than N.

Assume {*U*} is a measured sample event vector with N values, each of which is from one of the N detectors.

Assume {*V*} is the unmixed sample event vector with M values (e.g., fluorescence intensity), each of which is the unmixed value for a fluorochrome (e.g., one of the FITC, PE, PerCP, PE-Cy7, APC, APC-Cy7).

The unmixed sample event vector {*V*} has the following matrix relationship with the measured sample event vector {*U*}: $\left[R\right] \left\{V\right\} = \left\{U\right\}$

Since the number of the variables M in the unmixed sample event vector {*V*} is less than the number of variables N in the measured sample event vector {*U*} (e.g., the dimension of the unmixed sample event vector is less than the dimension of the measured sample even vector), then the system uses a least square algorithm to obtain the solution of the above equation.

Compared with conventional flow cytometer, the unmixed event vector is equivalent to the compensated event vector. Therefore, spectral spillover matrix for the unmixed event list data (e.g., unmixed sample even vector) is an identity matrix [I] as follows: $\left[S\right] = \left[\begin{matrix}1.0 & 0 & … & 0 \\ 0 & 1.0 & … & 0 \\ ⋮ & ⋮ & ⋮ & ⋮ \\ 0 & 0 & … & 1.0\end{matrix}\right]$

In general, the unmixed event list data is not accurate enough so that fine adjustment of identity spectral spillover is needed (e.g., fine adjustment to generate an adjusted spectral spillover matrix). Accordingly, the equation for the re-compensated event vector for a spectral flow cytometer becomes {*V_{R}*} *=* [[*I*] *+* [*D*]]⁻¹{*V*} where [D] is an n x n delta matrix with fine adjustments δ_{i,j} in the i^{th} row and j^{th} column respectively and zeroes where no fine adjustment is needed. For example, a delta matrix can be $\left[D\right] = \left[\begin{matrix}{δ}_{1 , 1} & ⋯ & 0 & ⋯ & {δ}_{1 , n} \\ {δ}_{2 , 1} & ⋯ & ⋮ & ⋯ & {δ}_{2 , n} \\ ⋮ & ⋯ & ⋮ & ⋯ & ⋮ \\ 0 & ⋯ & {δ}_{i , j} & ⋯ & 0 \\ ⋮ & ⋯ & ⋮ & ⋯ & ⋮ \\ {δ}_{n , 1} & ⋯ & 0 & ⋯ & {δ}_{n , n}\end{matrix}\right]$.

### FAST COMPENSATION OF FLOW CYTOMETRY DATA

Accordingly, in flow cytometry (e.g., conventional and spectral), Flow Cytometry Standard (FCS) data collected from a cytometer is linear raw list data. List data needs to be compensated before it is consumed on plots and used for statistics analysis of cells in a sample. The system performs fast compensation to account for insufficient accuracies in a spillover matrix of a conventional flow cytometer and/or unmixed event list data of a spectral flow cytometer.

Compensation of list data is based on an initial spillover matrix that the system obtains from measured single stained compensation controls and/or from fine adjustment input. The obtained initial spillover matrix is in general not accurate enough. Fine adjustments are made that generate an adjusted spillover matrix by finely adjusting values in the initial spillover matrix.

Every time a spillover value is finely adjusted, the spillover matrix needs to be inverted to obtain the compensation matrix. Then the compensation matrix is multiplied by each list data event vector to generate the compensated list data (e.g., re-compensated event vector).

Take an experiment of N fluorescent parameters, for example. For the compensation of each event vector, it requires N² multiplications plus N × (N-1) additions to generate the compensated event vector. The computation complexity is on the order of N² (e.g., O(N²)).

For an experiment with a limited number of fluorochrome parameters and limited number of events, compensation calculation may not be the bottleneck in flow cytometry data analysis. However, if an experiment contains a large number of fluorescent parameters (e.g., over 20 fluorescent parameters) with a large number of events (e.g., 2 million events), the compensation calculation can be extremely time consuming. The consequence is that each time the system changes a spillover value, displayed plots and statistics can be extremely slow to respond on a computer interface due to extensive amount of computations processed.

Advantageously, the present system performs a fast compensation algorithm that significantly reduces the amount of computations without sacrificing any accuracy for the compensated list data when the system receives or performs fine adjustment of the spillover matrix for flow cytometry data analysis. This fast compensation algorithm requires, for example, only (3N + 1) multiplications/divisions plus (N +1) additions. The complexity of this fast compensation algorithm is on the order of N (e.g., O(N)). Therefore, the present system can significantly improve the responsiveness of the displayed plots and statistics.

Consider, for example, a 20-color experiment with one million events. Whenever the system receives or performs fine adjustment of a spillover value, a typical compensation algorithm requires a total of 400 million multiplications plus 399 million additions. In contrast, the fast compensation algorithm of the present system requires only a total of 60 million multiplications plus 20 million additions. The saving of the total multiplications and additions are 566% and 1895%, respectively, compared with a typical compensation algorithm.

The derivation of the present fast compensation algorithm. is now discussed.

Assume matrix [C] is a compensation matrix. The compensation matrix [C] is the inverse of the spillover matrix [S] by the matrix equation [*C*] *=* [*S*]⁻¹. If the compensation matrix [C] and the inverse of the spillover matrix [S] are multiplied together, one acquires the identity matrix such as in the matrix equation [*C*][*S*] *=* [*I*]*.* The compensated event vector {*V*} can be computed by multiplying the compensation matrix [C] and the uncompensated measured event vector {*U*} together represented by the matrix equation {*V*} = [*C*]{*U*}.

Due to a fine adjustment, the system generates or calculates an adjusted spillover matrix [S]'. Assume the value of one element in the initial spillover matrix [S] is changed, for example S_{i,j}'=> S_{i,j} + δ_{i,j}, the finely adjusted spillover matrix [S]' can be represented by the sum of the initial spillover matrix [S] summed with the fine adjustments in the delta matrix [D] by the matrix equation [*S*]' = [*S*] + [*D*] where $\left[D\right] = \left[\begin{matrix}0 & ⋯ & 0 & ⋯ & 0 \\ ⋮ & ⋯ & ⋮ & ⋯ & ⋮ \\ ⋮ & ⋯ & ⋮ & ⋯ & ⋮ \\ 0 & ⋯ & {δ}_{i , j} & ⋯ & 0 \\ ⋮ & ⋯ & ⋮ & ⋯ & ⋮ \\ 0 & ⋯ & 0 & ⋯ & 0\end{matrix}\right]$ is the delta matrix in which subscripts i and j represent the i^{th} row and j^{th} column respectively. The re-compensated event vector {V_{R}} can be calculated by multiplying the inverse of the finely adjusted spillover matrix [S]', the finely adjusted compensation matrix [C]', and the uncompensated measured event vector {*U*} together such as represented by the matrix equation {*V_{R}*} *=* [[*S*] *+* [*D*]]⁻¹{*U*}*.* The delta matrix [*D*] has the same dimensions as the initial spillover matrix [*S*]. The delta matrix [*D*] includes delta values δ_{i,j} for finely adjusting the initial spillover matrix [*S*].

For purposes of the claims, a delta matrix [D] with fine adjustment is illustrated above, where the delta matrix [D] is shown with a singular off-diagonal non-zero value (*δ_{i,j}*) and off-diagonal values of zero (0) elsewhere. The diagonal values of the delta matrix [D] are the most significant bits of the matrix and are not adjusted. The off-diagonal values of the delta matrix [D] are the less significant bits of the matrix and can be adjusted. A user obtains the delta matrix [D] by increasing a zero value or increasing/decreasing the non-zero value (*δ_{i,j}*) of the delta matrix [D]. In a well-understood experimentation technique, a zero or non-zero value (*δ_{i,j}*) is increased or decreased by finely adjusting it, by changing it, such as between 1% and 5%, typically less than 5%. With the diagonal values of 100%, the off-diagonal values are adjusted one at a time, incrementally by one percent or by the user inputting a desired percentage of adjustment, typically less than 5%. Such a simple delta matrix [D] enables a user to input a fine adjustment without undue experimentation. Such a simple delta matrix [D] enables a re-compensated event vector {*V_{R}*} to be calculated according to the fast compensation algorithm shown below.

Since [*S*] + [*D*] = [*S*]([*I*] + [*C*][*D*]), [[*S*] *+* [*D*]]⁻¹ *=* ([*I*] *+* [*C*][*D*])⁻¹[*C*]*,* the equation for the re-compensated event vector {V_{R}} can be rewritten as $\left\{{V}_{R}\right\} = {\left(\left[I\right]+\left[C\right]\left[D\right]\right)}^{- 1} \left[C\right] \left\{U\right\} = {\left(\left[I\right]+\left[C\right]\left[D\right]\right)}^{- 1} \left\{V\right\}$ where ([*I*] + [*C*][*D*])⁻¹ is a re-compensation matrix.

Since the re-compensation matrix can be simplified as ${\left(\left[I\right]+\left[C\right]\left[D\right]\right)}^{- 1} = {\left[\begin{matrix}1 & ⋯ & {C}_{1 , i} {δ}_{i , j} & ⋯ & 0 \\ ⋮ & ⋯ & ⋮ & ⋯ & ⋮ \\ ⋮ & ⋯ & ⋮ & ⋯ & ⋮ \\ 0 & ⋯ & 1 + {C}_{j , i} {δ}_{i , j} & ⋯ & 0 \\ ⋮ & ⋯ & ⋮ & ⋯ & ⋮ \\ 0 & ⋯ & {C}_{n , i} {δ}_{i , j} & ⋯ & 1\end{matrix}\right]}^{- 1} = \left[\begin{matrix}1 & ⋯ & \frac{- {C}_{1 , i} {δ}_{i , j}}{1 + {C}_{j , i} {δ}_{i , j}} & ⋯ & 0 \\ ⋮ & ⋯ & ⋮ & ⋯ & ⋮ \\ ⋮ & ⋯ & ⋮ & ⋯ & ⋮ \\ 0 & ⋯ & \frac{1}{1 + {C}_{j , i} {δ}_{i , j}} & ⋯ & 0 \\ ⋮ & ⋯ & ⋮ & ⋯ & ⋮ \\ 0 & ⋯ & \frac{- {C}_{n , i} {δ}_{i , j}}{1 + {C}_{j , i} {δ}_{i , j}} & ⋯ & 1\end{matrix}\right] ,$ then the matrix equation for the re-compensated event vector can be written as $\left\{{V}_{R}\right\} = \left[\begin{matrix}1 & ⋯ & \frac{- {C}_{1 , i} {δ}_{i , j}}{1 + {C}_{j , i} {δ}_{i , j}} & ⋯ & 0 \\ ⋮ & ⋯ & ⋮ & ⋯ & ⋮ \\ ⋮ & ⋯ & ⋮ & ⋯ & ⋮ \\ 0 & ⋯ & \frac{1}{1 + {C}_{j , i} {δ}_{i , j}} & ⋯ & ⋮ \\ ⋮ & ⋯ & ⋮ & ⋯ & ⋮ \\ 0 & ⋯ & \frac{- {C}_{n , i} {δ}_{i , j}}{1 + {C}_{j , i} {δ}_{i , j}} & ⋯ & 1\end{matrix}\right] \left[\begin{matrix}{V}_{1} \\ ⋮ \\ {V}_{j} \\ ⋮ \\ ⋮ \\ {V}_{n}\end{matrix}\right] = \left[\begin{matrix}{V}_{1} - {V}_{j} \frac{{C}_{1 , i} {δ}_{i , j}}{1 + {C}_{j , i} {δ}_{i , j}} \\ ⋮ \\ {V}_{j} - {V}_{j} \frac{{C}_{j , i} {δ}_{i , j}}{1 + {C}_{j , i} {δ}_{i , j}} \\ ⋮ \\ ⋮ \\ {V}_{n} - {V}_{j} \frac{{C}_{n , i} {δ}_{i , j}}{1 + {C}_{j , i} {δ}_{i , j}}\end{matrix}\right]$

Each component of the re-compensated vector is determined by an addition/subtraction and multiplication/division with components of the uncompensated measured event vector {*U*} thereby significantly reducing the number of computations. Accordingly, the re-compensated event vector {V_{R}} can be computed much more quickly by a processor of a computer using the fast compensation algorithm. The fast compensation algorithm eliminates the need to recompute the entire inverse spillover matrix [*S*]⁻¹. Thus, using the fast compensation algorithm, cell samples can be more quickly analyzed with a flow cytometer and results (e.g., cell count, concentration, titration) more efficiently obtained. Instead of a researcher or a lab technician spending one or more days waiting for computations to be completed to obtain lab results of a biological sample (e.g., blood or urine), the lab results of the biological sample can be obtained within hours by using the fast compensation algorithm. The user (e.g., researcher or lab technician) thereby saves time.

### CONCLUSION

The embodiments are thus described. While embodiments have been particularly described, they should not be construed as limited by such embodiments, but rather construed according to the claims that follow below.

While certain exemplary embodiments have been described and shown in the accompanying drawings, it is to be understood that such embodiments are merely illustrative of and not restrictive on the broad invention, and that the embodiments not be limited to the specific constructions and arrangements shown and described, since various other modifications may occur to those ordinarily skilled in the art.

Certain functions of a flow cytometer can be implemented in software and executed by a computer or processor, such as the analysis of the electrical signals detected by the detectors to count different particles in a sample fluid. The program or code segments of the software are used to perform the necessary tasks to perform those functions. The program or code segments can be stored in a processor readable medium or transmitted by a computer data signal embodied in a carrier wave over a transmission medium or communication link. The processor readable medium can include any storage medium that can store information. Examples of the processor readable medium include an electronic circuit, a semiconductor memory device, a read only memory (ROM), a flash memory, an erasable programmable read only memory (EPROM), a floppy diskette, a CD-ROM, an optical disk, and a hard disk. The code segments can be downloaded via computer networks such as the Internet, Intranet, etc. to the storage medium.

## Claims

1. A method of performing flow cytometry with a conventional flow cytometer (1604) that uses mirrors, optical filters, and photomultiplier tubes to capture or sense signal data, the method comprising:
after calibrating (1505) the conventional flow cytometer and
generating (1510) an initial spillover matrix with the conventional flow cytometer by using a plurality of single stained compensation controls (1602),
running (1515) a biological sample (1610) through the conventional flow cytometer (1604);
generating a measured sample event vector by measuring fluorescence of a plurality of cells in the biological sample passing through the conventional flow cytometer (1604); and
after running the biological sample and generating the measured sample event vector with the conventional flow cytometer, a processor of a computer executing instructions to perform the functions of:
generating (1520) a compensated sample event vector by using the initial spillover matrix and the measured sample event vector, wherein the compensated sample event vector equals the measured sample event vector linearly multiplied times an inverse of the initial spillover matrix;
generating (1525) an adjusted spillover matrix by making fine adjustments to the initial spill-over matrix, wherein the fine adjustments include adjustments needed to correct distortion caused either by interactions of different fluorochromes stained on the same cells or the same particles, distortions caused by the conventional flow cytometer (1604) measuring single stained and unstained controls, or by both distortion causes; and
calculating (1527) a re-compensated event vector by using the adjusted spillover matrix and the measured sample event vector to accurately separate spectrum.

2. The method of claim 1, wherein
a re-compensation matrix is formed using the initial spillover matrix and the fine adjustments to the initial spillover matrix in a delta matrix; and
the calculating of the re-compensated event vector is by linearly multiplying the re-compensation matrix and the measured sample event vector together thereby reducing the number of computations to quickly obtain lab results for the biological sample.

3. The method of claim 1, wherein generating an adjusted spillover matrix comprises:
adding a delta matrix to the initial spillover matrix,
wherein the delta matrix has the same dimensions as the initial spillover matrix, and
wherein the delta matrix includes one or more delta values for finely adjusting the initial spillover matrix.

4. The method of claim 1, wherein the initial spillover matrix includes dimensions of N×N, and wherein N is a number of the single stained compensation controls (1602A-1602E).

5. The method of claim 1, wherein each of the single stained compensation controls (1602A-1602E) includes any one of: fluorescein isothiocyanate (FITC); R-phycoerythrin (PE); Peridinin Chlorophyll Protein Complex (PerCP); PE-Cy7; Allophycocyanin (APC); or APC-Cy7.

6. The method of claim 4, wherein the measured sample event vector includes N values, and wherein the compensated sample event vector has N values.

7. The method of claim 2, wherein the re-compensated even vector equals the measured sample event vector multiplied times an inverse of the sum of the initial spillover matrix and a delta matrix.

8. A method of performing flow cytometry with a spectral flow cytometer (1614) that uses a multichannel detector with a means to disperse a light spectrum across a plurality of channels into semiconductor photodetectors, the method comprising:
after calibrating (1505) the spectral flow cytometer and
generating (1510) a reference matrix by using a plurality of single stained compensation controls (1602A-1602E),
running (1515) a biological sample (1602) through the flow cytometer (1614);
generating a measured sample event vector by measuring fluorescence of a plurality of cells passing through the flow cytometer (1614);
after running the biological sample and generating the measured sample event vector with the semiconductor photodetectors of the spectral flow cytometer, a processor of a computer executing instructions to perform the functions of:
generating (1520) an unmixed sample event vector by using the reference matrix and the measured sample event vector, wherein a number of variables in the unmixed sample event vector is less than a number of variables in the measured sample event vector, and wherein the unmixed sample event vector equals the measured sample event vector linearly multiplied times an inverse of the reference matrix;
generating (1525) an adjusted spectral spillover matrix by making fine adjustments to a spectral spillover matrix, wherein the fine adjustments include adjustments needed to correct distortion caused either by interactions of different fluorochromes stained on the same cells or the same particles, distortions caused by the spectral flow cytometer (1614) measuring single stained and unstained controls, or by both distortion causes; and
calculating (1527) a re-compensated event vector by using the adjusted spectral spillover matrix and the measured sample event vector.

9. The method of claim 8, wherein
a re-compensation matrix is formed using the spectral spillover matrix and the fine adjustments to the spectral spillover matrix in a delta matrix; and
the calculating of the re-compensated event vector is by linearly multiplying the re-compensation matrix and the measured sample event vector together hereby reducing the number of computations to quickly obtain lab results for the biological sample.

10. The method of claim 8, further comprising:
solving for the unmixed sample event vector comprises using a least square algorithm on the measured sample event vector and the inverse of the reference matrix.

11. The method of claim 8, wherein an initial spectral spillover matrix for the unmixed sample event vector is an identity matrix.

12. The method of claim 11, wherein generating an adjusted spectral spillover matrix comprises:
adding a delta matrix to the initial spectral spillover matrix
wherein the delta matrix has the same dimensions as the initial spillover matrix, and
wherein the delta matrix includes one or more delta values for finely adjusting the initial spillover matrix.

13. The method of claim 11, wherein the initial spectral spillover matrix includes dimensions of N×N, and wherein N is a number of the single stained compensation controls (1602A-1602E).

14. The method of claim 8, wherein the measured sample event vector includes N values, and wherein the unmixed sample event vector has N values.

15. The method of claim 11, wherein the re-compensated sample event vector equals the measured sample event vector multiplied times an inverse of the sum of the initial spectral spillover matrix and a delta matrix.

## Patentansprüche

1. Verfahren zum Durchführen einer Durchflusszytometrie mit einem herkömmlichen Durchflusszytometer (1604), das Spiegel, optische Filter und Photomultiplier-Röhren verwendet, um Signaldaten zu erfassen oder abzutasten, wobei das Verfahren aufweist:
nach dem Kalibrieren (1505) des herkömmlichen Durchflusszytometers und dem Erzeugen (1510) einer anfänglichen Überlaufmatrix mit dem herkömmlichen Durchflusszytometer unter Verwendung von mehreren einfach gefärbten Kompensationskontrollen (1602),
Durchleiten (1515) einer biologischen Probe (1610) durch das herkömmliche Durchflusszytometer (1604);
Erzeugen eines gemessenen Probenereignisvektors durch Messen der Fluoreszenz von mehreren Zellen in der biologischen Probe, die das herkömmliche Durchflusszytometer (1604) passiert; und
nach dem Durchleiten der biologischen Probe und dem Erzeugen des gemessenen Probenereignisvektors mit dem herkömmlichen Durchflusszytometer führt ein Prozessor eines Computers Befehle aus, um die Funktionen auszuführen:
Erzeugen (1520) eines kompensierten Probenereignisvektors unter Verwendung der anfänglichen Überlaufmatrix und des gemessenen Probenereignisvektors, wobei der kompensierte Probenereignisvektor gleich dem gemessenen Probenereignisvektor ist, linear multipliziert mit der Inversen der anfänglichen Überlaufmatrix;
Erzeugen (1525) einer angepassten Überlaufmatrix durch Feinanpassungen an der anfänglichen Überlaufmatrix, wobei die Feinanpassungen Anpassungen aufweisen, die erforderlich sind, um Verzerrungen, die entweder durch Wechselwirkungen verschiedener Fluorochrome, mit denen dieselben Zellen oder dieselben Partikel eingefärbt sind, verursacht werden, Verzerrungen, die durch das herkömmliche Durchflusszytometer (1604) verursacht werden, das einfach eingefärbte und uneingefärbte Kontrollen misst, oder durch beide Verzerrungsursachen verursacht werden, zu korrigieren; und
Berechnen (1527) eines rekompensierten Ereignisvektors unter Verwendung der angepassten Überlaufmatrix und des gemessenen Probenereignisvektors, um das Spektrum genau zu trennen.

2. Verfahren nach Anspruch 1, wobei
eine Rekompensationsmatrix unter Verwendung der anfänglichen Überlaufmatrix und der Feinanpassungen an der anfänglichen Überlaufmatrix in einer Delta-Matrix gebildet wird; und
die Berechnung des rekompensierten Ereignisvektors durch lineares Multiplizieren der Rekompensationsmatrix mit dem gemessenen Probenereignisvektor erfolgt, wodurch die Anzahl der Berechnungen reduziert wird, um schnell Laborergebnisse für die biologische Probe zu erhalten.

3. Verfahren nach Anspruch 1, wobei das Erzeugen einer angepassten Überlaufmatrix aufweist:
Addieren einer Delta-Matrix zur anfänglichen Überlaufmatrix,
wobei die Delta-Matrix dieselben Dimensionen wie die anfängliche Überlaufmatrix aufweist, und
wobei die Delta-Matrix einen oder mehrere Delta-Werte zum Feinanpassen der anfänglichen Überlaufmatrix enthält.

4. Verfahren nach Anspruch 1, wobei die anfängliche Überlaufmatrix die Dimensionen N×N aufweist und wobei N die Anzahl der einfach gefärbten Kompensationskontrollen (1602A-1602E) ist.

5. Verfahren nach Anspruch 1, wobei jede der einfach gefärbten Kompensationskontrollen (1602A-1602E) irgendeines enthält von: Fluoresceinisothiocyanat (FITC); R-Phycoerythrin (PE); Peridinin-Chlorophyll-Protein-Komplex (PerCP); PE-Cy7; Allophycocyanin (APC); oder APC-Cy7.

6. Verfahren nach Anspruch 4, wobei der gemessene Probenereignisvektor N Werte aufweist und wobei der kompensierte Probenereignisvektor N Werte aufweist.

7. Verfahren nach Anspruch 2, wobei der rekompensierte Ereignisvektor gleich dem gemessenen Probenereignisvektor ist, multipliziert mit der Inversen der Summe der anfänglichen Überlaufmatrix und einer Delta-Matrix.

8. Verfahren zum Durchführen einer Durchflusszytometrie mit einem spektralen Durchflusszytometer (1614), das einen Mehrkanaldetektor mit einer Einrichtung verwendet, um ein Lichtspektrum über mehrere Kanäle in Halbleiter-Fotodetektoren aufzuteilen, wobei das Verfahren aufweist:
nach dem Kalibrieren (1505) des spektralen Durchflusszytometers und Erzeugen (1510) einer Referenzmatrix unter Verwendung von mehreren einfach gefärbten Kompensationskontrollen (1602A-1602E),
Durchleiten (1515) einer biologischen Probe (1602) durch das Durchflusszytometer (1614);
Erzeugen eines gemessenen Probenereignisvektors durch Messen der Fluoreszenz von mehreren Zellen, die das Durchflusszytometer (1614) passieren;
nach dem Durchleiten der biologischen Probe und dem Erzeugen des gemessenen Probenereignisvektors mit den Halbleiter-Fotodetektoren des spektralen Durchflusszytometers führt ein Prozessor eines Computers Befehle aus, um die Funktionen auszuführen:
Erzeugen (1520) eines ungemischten Probenereignisvektors unter Verwendung der Referenzmatrix und des gemessenen Probenereignisvektors, wobei die Anzahl der Variablen im ungemischten Probenereignisvektor geringer ist als die Anzahl der Variablen im gemessenen Probenereignisvektor und wobei der ungemischte Probenereignisvektor gleich dem gemessenen Probenereignisvektor ist, linear multipliziert mit der Inversen der Referenzmatrix;
Erzeugen (1525) einer angepassten spektralen Überlaufmatrix durch Feinanpassungen an einer spektralen Überlaufmatrix, wobei die Feinanpassungen Anpassungen aufweisen, die erforderlich sind, um Verzerrungen, die entweder durch Wechselwirkungen verschiedener Fluorochrome, mit denen dieselben Zellen oder dieselben Partikel eingefärbt sind, verursacht werden, Verzerrungen, die durch das spektrale Durchflusszytometer (1614) verursacht werden, das einfach eingefärbte und uneingefärbte Kontrollen misst, oder durch beide Verzerrungsursachen verursacht werden, zu korrigieren; und
Berechnen (1527) eines rekompensierten Ereignisvektors unter Verwendung der angepassten spektralen Überlaufmatrix und des gemessenen Probenereignisvektors.

9. Verfahren nach Anspruch 8, wobei
eine Rekompensationsmatrix unter Verwendung der spektralen Überlaufmatrix und der Feinanpassungen an der spektralen Überlaufmatrix in einer Delta-Matrix gebildet wird; und
die Berechnung des re-kompensierten Ereignisvektors durch lineares Multiplizieren der Rekompensationsmatrix mit dem gemessenen Probenereignisvektor erfolgt, wodurch die Anzahl der Berechnungen reduziert wird, um schnell Laborergebnisse für die biologische Probe zu erhalten.

10. Verfahren nach Anspruch 8, das ferner aufweist:
das Auflösen nach dem ungemischten Probenereignisvektor das Verwenden eines Algorithmus der kleinsten Quadrate auf den gemessenen Probenereignisvektor und der Inversen der Referenzmatrix aufweist.

11. Verfahren nach Anspruch 8, wobei eine anfängliche spektrale Überlaufmatrix für den ungemischten Probenereignisvektor eine Einheitsmatrix ist.

12. Verfahren nach Anspruch 11, wobei das Erzeugen einer angepassten spektralen Überlaufmatrix aufweist:
Addieren einer Delta-Matrix zur anfänglichen spektralen Überlaufmatrix,
wobei die Delta-Matrix dieselben Dimensionen wie die anfängliche Überlaufmatrix aufweist, und
wobei die Delta-Matrix einen oder mehrere Delta-Werte zum Feinanpassen der anfänglichen Überlaufmatrix enthält.

13. Verfahren nach Anspruch 11, wobei die anfängliche spektrale Überlaufmatrix die Dimensionen N×N aufweist und wobei N die Anzahl der einzeln gefärbten Kompensationskontrollen (1602A-1602E) ist.

14. Verfahren nach Anspruch 8, wobei der gemessene Probenereignisvektor N Werte aufweist und wobei der ungemischte Probenereignisvektor N Werte aufweist.

15. Verfahren nach Anspruch 11, wobei der rekompensierte Probenereignisvektor gleich dem gemessenen Probenereignisvektor ist, multipliziert mit der Inversen der Summe der anfänglichen spektralen Überlaufmatrix und einer Delta-Matrix.

## Revendications

1. Procédé de réalisation d'une cytométrie en flux à l'aide d'un cytomètre en flux classique (1604) qui utilise des miroirs, des filtres optiques et des tubes photomultiplicateurs pour capturer ou détecter des données de signal, le procédé comprenant :
après l'étalonnement (1505) du cytomètre en flux classique et la génération (1510) d'une matrice de débordement initiale avec le cytomètre en flux classique à l'aide d'une pluralité de contrôles de compensation à coloration unique (1602),
l'analyse (1515) d'un échantillon biologique (1610) à l'aide du cytomètre en flux classique (1604) ;
la génération d'un vecteur d'événements d'échantillon mesuré en mesurant la fluorescence d'une pluralité de cellules dans l'échantillon biologique passant à travers le cytomètre en flux classique (1604) ; et
après l'analyse de l'échantillon biologique et la génération du vecteur d'événements d'échantillon mesuré à l'aide du cytomètre en flux classique, un processeur d'un ordinateur exécutant des instructions pour effectuer les fonctions suivantes :
génération (1520) d'un vecteur d'événements d'échantillon compensé en utilisant la matrice de débordement initiale et le vecteur d'événements d'échantillon mesuré, le vecteur d'événements d'échantillon compensé étant égal au vecteur d'événements d'échantillon mesuré multiplié linéairement par l'inverse de la matrice de débordement initiale ;
génération (1525) d'une matrice de débordement ajustée en effectuant des ajustements fins sur la matrice de débordement initiale, les ajustements fins comprenant les ajustements nécessaires pour corriger les distorsions causées soit par les interactions entre différents fluorochromes marqués sur les mêmes cellules ou les mêmes particules, soit par les distorsions causées par le cytomètre en flux classique (1604) lors de la mesure de contrôles à marquage unique et de contrôles non marqués, soit par ces deux causes de distorsion ; et
calcul (1527) d'un vecteur d'événements recompensé en utilisant la matrice de débordement ajustée et le vecteur d'événements d'échantillon mesuré afin de séparer le spectre avec précision.

2. Procédé selon la revendication 1, dans lequel
une matrice de recompensation est formée à l'aide de la matrice de débordement initiale et des ajustements fins apportés à la matrice de débordement initiale dans une matrice delta ; et
le calcul du vecteur d'événements recompensé s'effectue en multipliant linéairement la matrice de recompensation et le vecteur d'événements d'échantillon mesuré, réduisant ainsi le nombre de calculs afin d'obtenir rapidement les résultats de laboratoire pour l'échantillon biologique.

3. Procédé selon la revendication 1, dans lequel la génération d'une matrice de débordement ajustée comprend :
l'ajout d'une matrice delta à la matrice de débordement initiale,
la matrice delta ayant les mêmes dimensions que la matrice de débordement initiale, et
la matrice delta comprenant une ou plusieurs valeurs delta permettant d'ajuster avec précision la matrice de débordement initiale.

4. Procédé selon la revendication 1, dans lequel la matrice de débordement initiale présente des dimensions de N×N, et dans lequel N est le nombre de contrôles de compensation à coloration unique (1602A-1602E).

5. Procédé selon la revendication 1, dans lequel chacun des contrôles de compensation à coloration unique (1602A-1602E) comprend l'un quelconque des composés suivants :
l'isothiocyanate de fluorescéine (FITC) ; la R-phycoérythrine (PE) ; le complexe péridinine-chlorophylle-protéine (PerCP) ; le PE-Cy7 ; l'allophycocyanine (APC) ; ou l'APC-Cy7.

6. Procédé selon la revendication 4, dans lequel le vecteur d'événements d'échantillon mesuré comprend N valeurs, et dans lequel le vecteur d'événements d'échantillon compensé comprend N valeurs.

7. Procédé selon la revendication 2, dans lequel le vecteur d'événements recompensé est égal au vecteur d'événements d'échantillon mesuré multiplié par l'inverse de la somme de la matrice de débordement initiale et d'une matrice delta.

8. Procédé de réalisation d'une cytométrie en flux à l'aide d'un cytomètre en flux spectral (1614) qui utilise un détecteur multicanaux doté d'un moyen permettant de répartir un spectre lumineux sur une pluralité de canaux vers des photodétecteurs à semi-conducteurs, le procédé comprenant :
après l'étalonnement (1505) du cytomètre en flux spectral et
la génération (1510) d'une matrice de référence à l'aide d'une pluralité de contrôles de compensation à coloration unique (1602A-1602E),
l'analyse (1515) d'un échantillon biologique (1602) au moyen du cytomètre en flux (1614) ;
la génération d'un vecteur d'événements d'échantillon mesuré en mesurant la fluorescence d'une pluralité de cellules passant à travers le cytomètre en flux (1614) ;
après l'analyse de l'échantillon biologique et la génération du vecteur d'événements d'échantillon mesuré à l'aide des photodétecteurs à semi-conducteurs du cytomètre en flux spectral, un processeur d'un ordinateur exécutant des instructions pour effectuer les fonctions suivantes :
génération (1520) d'un vecteur d'événements d'échantillon non mélangé en utilisant la matrice de référence et le vecteur d'événements d'échantillon mesuré, dans lequel le nombre de variables dans le vecteur d'événements d'échantillon non mélangé est inférieur au nombre de variables dans le vecteur d'événements d'échantillon mesuré, et dans lequel le vecteur d'événements d'échantillon non mélangé est égal au vecteur d'événements d'échantillon mesuré multiplié linéairement par l'inverse de la matrice de référence ;
génération (1525) d'une matrice de débordement spectral ajustée en effectuant des ajustements fins sur une matrice de débordement spectral, les ajustements fins comprenant les ajustements nécessaires pour corriger les distorsions causées soit par les interactions entre différents fluorochromes marqués sur les mêmes cellules ou les mêmes particules, soit par les distorsions causées par le cytomètre en flux spectral (1614) mesurant des contrôles à marquage unique et des contrôles non marqués, soit par ces deux causes de distorsion ; et
calcul (1527) d'un vecteur d'événements recompensé en utilisant la matrice de débordement spectral ajustée et le vecteur d'événements d'échantillon mesuré.

9. Procédé selon la revendication 8, dans lequel
une matrice de recompensation est formée à l'aide de la matrice de débordement spectral et des ajustements fins apportés à cette dernière dans une matrice delta ; et
le calcul du vecteur d'événements recompensé s'effectue par multiplication linéaire de la matrice de recompensation et du vecteur d'événements d'échantillon mesuré, ce qui réduit le nombre de calculs afin d'obtenir rapidement les résultats de laboratoire pour l'échantillon biologique.

10. Procédé selon la revendication 8, comprenant en outre :
la détermination du vecteur d'événements d'échantillon non mélangé comprend l'utilisation d'un algorithme des moindres carrés sur le vecteur d'événements d'échantillon mesuré et l'inverse de la matrice de référence.

11. Procédé selon la revendication 8, dans lequel une matrice de débordement spectral initiale pour le vecteur d'événements d'échantillon non mélangé est une matrice identité.

12. Procédé selon la revendication 11, dans lequel la génération d'une matrice de débordement spectral ajustée comprend :
l'ajout d'une matrice delta à la matrice de débordement spectral initiale la matrice delta ayant les mêmes dimensions que la matrice de débordement initiale, et
la matrice delta comprenant une ou plusieurs valeurs delta destinées à ajuster avec précision la matrice de débordement initiale.

13. Procédé selon la revendication 11, dans lequel la matrice de débordement spectral initiale présente des dimensions de N×N, et dans lequel N est le nombre de contrôles de compensation à coloration unique (1602A-1602E).

14. Procédé selon la revendication 8, dans lequel le vecteur d'événements d'échantillon mesuré comprend N valeurs, et dans lequel le vecteur d'événements d'échantillon non mélangé comprend N valeurs.

15. Procédé selon la revendication 11, dans lequel le vecteur d'événements d'échantillon recompensé est égal au vecteur d'événements d'échantillon mesuré multiplié par l'inverse de la somme de la matrice de débordement spectral initiale et d'une matrice delta.
